# EUROPÄISCHE PATENTSCHRIFT

(11) **EP 3 755 949 B1**
(45) Veröffentlichungstag und Bekanntmachung des Hinweises auf die Patenterteilung: **11.10.2023**
(21) Anmeldenummer: 19706964.4
(22) Anmeldetag: 20.02.2019
(51) Int. Cl.: F24D 13/02, F24D 19/10, H05B 3/06, H04L 12/28

(54) **MONTAGEVERFAHREN ZUR MONTAGE EINER FLÄCHENHEIZUNG UND FLÄCHENHEIZUNG**
MOUNTING METHOD FOR MOUNTING A SURFACE HEATER, AND SURFACE HEATER
PROCÉDÉ DE MONTAGE POUR LE MONTAGE D'UN SYSTÈME DE CHAUFFAGE DE SURFACE

(30) Priorität: 20.02.2018 DE 102018103792
(43) Veröffentlichungstag der Anmeldung: 30.12.2020
(73) Patentinhaber: Ardex Anlagen GmbH, 58453 Witten (DE)
(72) Erfinder: KOLLMANN, Philipp Karl, 8583 Edelschrott (AT); SCHREIBER, Emanuel, 58313 Herdecke (DE); SIEKSMEIER, Jörg, 45133 Essen (DE); SCHRÖDER, Marco, 59555 Lippstadt (DE)
(74) Vertreter: Bals & Vogel Patentanwälte PartGmbB
(86) Internationale Anmeldenummer: PCT/EP2019/054237
(87) Internationale Veröffentlichungsnummer: WO 2019/162338

(56) Entgegenhaltungen:
- EP-A1- 2 116 778
- EP-A1- 2 676 578
- EP-A1- 2 921 084
- DE-A1- 19 730 853
- DE-U1-202006 007 730
- DE-U1-202006 007 731
- US-A1- 2012 168 427

## Beschreibung

Die Erfindung betrifft ein Montageverfahren zur Montage einer Flächenheizung in einem Raum eines Gebäudes sowie eine Flächenheizung, insbesondere eine Fußbodenheizung.

Aus dem Stand der Technik sind Fußbodenheizungen bekannt, bei welchen ein elektrisches Widerstandselement zur Abgabe von Wärme in einem Raum verlegt wird. Dabei hat das elektrische Widerstandselement häufig die Form eines Kabels. Bei der Montage derartiger elektrischer Fußbodenheizungen ist es notwendig, dass der Monteur das Widerstandselement gleichmäßig im Raum verlegt. Dies erfordert Erfahrung des Monteurs sowie dessen Geschick.

Ferner ist es häufig von Nachteil, dass bekannte Fußbodenheizungen nur unter hohem Aufwand an bestimmte Raumgeometrien angepasst werden können. So kann es beispielsweise notwendig sein, einen Erker vollständig bei der Montage der Fußbodenheizung auszusparen, so dass dieser im Nachhinein nicht beheizbar ist. Auch ein in einen Raum hineinragender Kamin kann beispielsweise dazu führen, dass die Fußbodenheizung auf Höhe des Kamins verlegt wird, so dass ein Randbereich des Raumes nicht mit der Fußbodenheizung ausgestattet wird. Weiterhin sind oft viele einzelne Hauptanschlüsse vorgesehen, welche separat zu einer Energiequelle oder einem Steuergerät geführt werden, so dass sich eine Notwendigkeit zusätzlicher Kabelschächte oder Freiräume für zur Energiequelle oder zum Steuergerät führende Kabel ergeben kann.

Weiterhin sind Heizvorrichtungen beispielsweise aus den Dokumenten DE 20 2006 007730 U1, EP 2 921 084 A1, US 2012/168427 A1, DE 20 2006 007731 U1, EP 2 116 778 A1, DE 197 30 853 A1 sowie EP 2 676 578 A1 bekannt.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, eine Montage einer Flächenheizung, vorzugsweise bei vergrößertem Funktionsumfang zu vereinfachen.

Die Aufgabe wird gelöst durch ein Montageverfahren mit den Merkmalen des Anspruchs 1 eine Flächenheizung mit den Merkmalen des Anspruchs 12 sowie eine Anordnung mit den Merkmalen des Anspruchs 13.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Montageverfahren beschrieben worden sind, selbstverständlich auch im Zusammenhang mit der erfindungsgemäßen Flächenheizung und jeweils umgekehrt, so dass bezüglich der Offenbarung zu den einzelnen Erfindungsaspekten stets wechselseitig Bezug genommen wird bzw. werden kann.

Erfindungsgemäß weist das Montageverfahren zur Montage einer Flächenheizung in einem Raum eines Gebäudes die folgenden Schritte auf:
- Verlegen einer ersten Heizmatte mit einem elektrischen Heizmittel auf einem Bauelement des Gebäudes,
- Verlegen einer zweiten Heizmatte mit einem weiteren elektrischen Heizmittel neben der ersten Heizmatte auf dem Bauelement des Gebäudes und Herstellen einer elektrischen Verbindung der ersten Heizmatte mit der zweiten Heizmatte,
- Anschließen zumindest der ersten Heizmatte an einer Energiequelle.

Vorzugsweise kann die erste und/oder zweite Heizmatte plattenförmig ausgestaltet sein. Insbesondere kann die erste und/oder zweite Heizmatte vorteilhafterweise eine Grundfläche von kleiner 2m x 2m, vorzugsweise von kleiner 1,5m x 1,5m, besonders bevorzugt von kleiner 1,1m x 0,8m aufweisen. Unter der Energiequelle kann vorzugsweise ein Anschluss an ein Stromnetz, insbesondere ein Hausstromanschluss, verstanden werden, so dass die elektrischen Heizmittel der ersten und zweiten Heizmatte mit Strom versorgt werden können. Das Anschließen der ersten Heizmatte an eine Energiequelle kann vorzugsweise ein Anschließen der ersten Heizmatte an eine Unterputzdose umfassen. Vorzugsweise kann auch die zweite Heizmatte separat an die Energiequelle angeschlossen werden. Bevorzugt wird jedoch lediglich die erste Heizmatte an die Energiequelle angeschlossen und das elektrische Heizmittel der zweiten Heizmatte über die elektrische Verbindung der ersten und zweiten Heizmatte mit Energie versorgt. Das Bauelement des Gebäudes kann vorzugsweise einen Rohboden des Gebäudes umfassen. Ferner kann das Bauelement beispielsweise ein Wandelement des Gebäudes oder dgl. umfassen. Die erste und zweite Heizmatte können vorzugsweise jeweils ein einzelnes Heizmodul bilden, welche gemeinsam zur Ausgestaltung der Flächenheizung dienen können. Dabei können insbesondere weitere Heizmatten verlegt werden, um die Flächenheizung, insbesondere über die gesamte Fläche des Raumes, auszubilden. Das Verlegen der ersten und/oder zweiten Heizmatte kann ein Ausrollen der ersten und/oder der zweiten Heizmatte oder ein flaches Ablegen der ersten und/oder zweiten Heizmatte auf dem Bauelement umfassen. Das Herstellen der elektrischen Verbindung der ersten und zweiten Heizmatte kann vorteilhafterweise ferner eine Verbindung zweier elektrischer Kontakte der ersten und zweiten Heizmatte umfassen. So ist es denkbar, dass die erste und zweite Heizmatte jeweils ein Kabel aufweisen, welche untereinander verbindbar sind, um die elektrische Verbindung zwischen der ersten und zweiten Heizmatte herzustellen. Die elektrische Verbindung kann eine Reihen- und/oder Parallelschaltung der elektrischen Heizmittel der ersten und zweiten Heizmatte umfassen. Beim Verlegen der ersten Heizmatte neben der zweiten Heizmatte kann insbesondere ein Teil der zweiten Heizmatte die erste Heizmatte überlappen und/oder umgekehrt. Vorzugsweise können die Heizmatten derart nebeneinander verlegt werden, dass zumindest die Heizmittel der ersten und zweiten Heizmatte keine Überlappung aufweisen.

Somit ist in einfacher Art und Weise eine Montage einer Flächenheizung in einem Raum eines Gebäudes möglich, in dem zwei insbesondere vorgefertigte Heizmatten auf einem Bauelement des Gebäudes verlegt werden und elektrisch miteinander verbunden werden. Die beiden Heizmatten können die gleiche Form haben oder jeweils eine individuelle Form, insbesondere eine an eine Raumgeometrie angepasste Form. Vorteilhafterweise kann die Flächenheizung schon im Vorfeld bei der Herstellung der ersten oder der zweiten Heizmatte geplant werden, so dass die erste und/oder zweite Heizmatte jeweils passend angeliefert werden können. Insbesondere können die erste und/oder zweite Heizmatte separat von der Baustelle des Gebäudes bzw. des Raumes gefertigt sein. Dadurch kann es beispielsweise ermöglicht sein, dass ein Monteur lediglich puzzleartig die Heizmatten aneinanderreiht und elektrisch verbindet, um die Flächenheizung im Raum zu verlegen. Dies kann insbesondere intuitiv durchgeführt werden, so dass gegebenenfalls eine komplexe Einweisung zur Montage der Flächenheizung entfallen kann. Wenn die elektrische Verbindung der ersten und zweiten Heizmatte auch gleichzeitig eine Steuer- und Energieversorgung der zweiten Heizmatte über die erste Heizmatte bereitstellt, ist ferner ein gesondertes Anschließen der zweiten Heizmatte an die Energiequelle nicht notwendig. Auch dadurch kann die Montage der Flächenheizung insgesamt vereinfacht sein, insbesondere wenn mehrere Heizmatten an unterschiedlichen Positionen im Raum angeordnet werden.

Bei einem erfindungsgemäßen Montageverfahren kann ferner vorgesehen sein, dass die elektrische Verbindung eine kraftschlüssige, formschlüssige und/oder reversible Verbindung ist. So ist es denkbar, dass die elektrische Verbindung durch Einklicken von Druckknöpfen hergestellt wird, welche elektrisch leitfähig sind. Dies kann eine intuitive Montage der Flächenheizung weiter unterstützen. Ferner ist durch eine reversible Verbindung ermöglicht, dass bei einer Fehlmontage, beispielsweise aufgrund einer komplexeren Raumgeometrie, die elektrische Verbindung gelöst werden kann und die erste und zweite Heizmatte erneut verwendet werden können. Eine formschlüssige elektrische Verbindung erhöht ferner die Sicherheit, dass die elektrische Verbindung auch im Betrieb dauerhaft gewährleistet ist. So ist es beispielsweise denkbar, dass während des Betriebes thermische Spannungen auftreten. Eine formschlüssige elektrische Verbindung ermöglicht somit eine zusätzliche mechanische Verbindung, welche Kräfte aufnehmen kann und, zum Beispiel beim Auftreten von thermischen Spannungen, zum Erhalt der elektrischen Verbindung beitragen kann. Ferner kann dadurch gewährleistet sein, dass die jeweiligen Kontakte insbesondere vollflächig miteinander in Verbindung bleiben und sich die Kontaktfläche nicht aufgrund von Relativbewegungen der ersten und zweiten Heizmatte zueinander reduziert.

Im Rahmen der Erfindung kann ferner vorgesehen sein, dass die erste Heizmatte, insbesondere beim Anschließen an die Energiequelle, mit einer Steuereinheit verbunden wird, durch welche zumindest eine Funktion der ersten und/oder der zweiten Heizmatte ansteuerbar ist. Es ist denkbar, dass das Anschließen der ersten Heizmatte an die Energiequelle indirekt dadurch durchgeführt wird, dass die erste Heizmatte an die Steuereinheit angeschlossen wird und die Steuereinheit das Energiemanagement der Flächenheizung oder zumindest ersten Heizmatte übernimmt. Ferner kann durch die Steuereinheit beispielsweise die Heizleistung der ersten und/oder zweiten Heizmatte, insbesondere jeweils, anpassbar sein, um die Temperatur im Raum zu regeln. Vorzugsweise kann es sich somit bei der ersten Heizmatte um einen Master handeln, welcher als zentrales Heizmodul vorgesehen ist und für die Ansteuerung der weiteren Heizmatten der Flächenheizung vorgesehen ist. Dies hat den Vorteil, dass zum einen nicht jede Heizmatte separat mit der Steuereinheit oder der Energiequelle verbunden werden muss und zum anderen bei einem Defekt oder bei einer Fehlfunktion der Steuereinheit lediglich die Steuereinheit zentral ausgetauscht oder upgedatet werden kann.

Vorteilhafterweise kann bei einem erfindungsgemäßen Montageverfahren ferner vorgesehen sein, dass das Montageverfahren folgenden Schritt umfasst:
- Befestigen einer Schalldämpfungsschicht und/oder einer Abdichtungsschicht an der ersten und/oder zweiten Heizmatte.

Insbesondere kann jede der Heizmatten separat mit einer Schalldämpfungsschicht und/oder einer Abdichtungsschicht ausgestattet werden. Durch die Schalldämpfungsschicht kann insbesondere bei einer Fußbodenheizung ein Trittschall zumindest teilweise gedämpft werden, so dass die Funktion der Heizung dahin gehend erweitert wird, dass auch eine Wahrnehmung eines Benutzers bei einer Bewegung im Raum positiv beeinflusst wird. Darüber hinaus kann durch die Abdichtungsschicht eine Feuchtigkeitsbarriere gebildet sein, so dass die Flächenheizung beispielsweise auch in einem Feuchtraum, wie einem Badezimmer, nutzbar sein kann. Somit kann auch bei einer erhöhten Feuchtigkeit in einem Raum verhindert sein, dass die Feuchtigkeit beispielsweise die elektrische Verbindung der ersten und zweiten Heizmatte durch Korrosion negativ beeinflusst. Das Befestigen der Schalldämpfungsschicht und/oder der Abdichtungsschicht kann abseits der Baustelle, insbesondere an einem zentralen Produktionsort der ersten und/oder zweiten Heizmatte vorgesehen sein oder auf der Baustelle durchgeführt werden. So ist es denkbar, dass die erste und/oder zweite Heizmatte bereits eine vorlaminierte Klebeschicht aufweist, auf welche die Schalldämpfungsschicht und/oder die Abdichtungsschicht aufgeklebt werden kann. Vorzugsweise kann die Schalldämpfungsschicht auf einer ersten Seite und die Abdichtungsschicht auf einer zweiten Seite der ersten und/oder zweiten Heizmatte angebracht werden. Somit ist eine Kombination von Schalldämpfungs- und Abdichtungsschicht möglich, so dass eine Kombination beider Vorteile erzielbar ist. Ein Verkleben bietet ferner den Vorteil, dass dieses intuitiv durchgeführt werden kann und lediglich eine Klebeschicht erfordert, insbesondere jedoch kein spezielles Werkzeug. Alternativ zum Verkleben sind jedoch auch weitere Befestigungsmethoden denkbar, wie beispielsweise Vernieten, das Einbringen von Halteklammern oder dgl.

Vorzugsweise können bei einem erfindungsgemäßen Montageverfahren die erste und zweite Heizmatte überlappend verlegt werden. Insbesondere kann dabei folgender Schritt vorgesehen sein:
- Verkleben der ersten und zweiten Heizmatte in jeweils zumindest einem Randbereich der ersten und zweiten Heizmatte.

Es ist beispielsweise denkbar, dass das elektrische Heizmittel der ersten und zweiten Heizmatte jeweils in einem Mittenbereich der ersten und zweiten Heizmatte vorgesehen ist, so dass dieser für die eigentliche Hauptfunktion der Flächenheizung genutzt werden kann.

Durch das Verkleben der ersten und zweiten Heizmatte in einem Randbereich kann somit gewährleistet werden, dass ein möglichst geringer Bereich der ersten und zweiten Heizmatte überlappt. Dadurch ist es beispielsweise möglich, dass die elektrischen Heizmittel im Montagezustand nicht überlappen, sondern lediglich die Randbereiche, welche verklebt werden. Das Überlappen der ersten und zweiten Heizmatte bietet jedoch grundsätzlich den Vorteil, dass eine Befestigung, insbesondere eine Verklebung, der ersten und zweiten Heizmatte in einfacher Art und Weise möglich ist, insbesondere ohne eine Verbindung auf Stoß der ersten und zweiten Heizmatte realisieren zu müssen. Dadurch können die erste und zweite Heizmatte eine geringe Dicke aufweisen und auch in dem Randbereich nicht oder nur geringfügig aufgedickt sein, um die Befestigung aneinander zu ermöglichen. Das Verkleben der ersten und zweiten Heizmatte in einem Randbereich stellt ferner eine einfache Möglichkeit dar, die Montage der Flächenheizung für den Monteur intuitiv zu halten.

Es ist weiterhin bei einem erfindungsgemäßen Montageverfahren denkbar, dass das Montageverfahren folgenden Schritt umfasst:
- Kalibrieren des elektrischen Heizmittels der ersten Heizmatte, wobei eine Ist-Temperatur ermittelt und mit einer vorgegebenen Soll-Temperatur verglichen wird.

Insbesondere kann lediglich eine Kalibrierung des ersten Heizmittels der ersten Heizmatte durchgeführt werden, während eine Kalibrierung der Heizmittel der weiteren Heizmatten ausbleibt. Ist die erste Heizmatte als Master ausgebildet, kann es somit ausreichen, das elektrische Heizmittel der ersten Heizmatte zu kalibrieren, insbesondere wenn alle weiteren Heizmittel im Raum von der ersten Heizmatte abhängen. Die Ist-Temperatur kann vorzugsweise durch einen Temperatursensor ermittelt werden, welcher beispielsweise Teil der ersten Heizmatte sein kann. Die Soll-Temperatur kann durch eine Steuereinheit vorgegeben sein und kann insbesondere durch einen Benutzer an der Steuereinheit vorgebbar sein. So ist es denkbar, dass die Steuereinheit mit einem mobilen Endgerät des Benutzers in Verbindung gebracht werden kann. Zusätzlich oder alternativ ist es denkbar, dass zur Vorgabe der Soll-Temperatur und/oder zur Ermittlung der Ist-Temperatur ein eigens ausgebildetes Kalibriergerät verwendet wird. Das Kalibrieren kann insbesondere einmalig für das elektrische Heizmittel durchgeführt werden, um die Flächenheizung an die Gegebenheiten des Raumes anzupassen, zum Beispiel bevor ein Anschluss an ein Steuergerät erfolgt. Insbesondere kann somit ein Offset der Temperaturmessung in Abhängigkeit von einem Fußbodenbelag gesetzt werden. So ist es denkbar, dass beispielsweise der Temperatursensor der ersten Heizmatte jeweils eine Temperatur misst, die von der eigentlichen Raumtemperatur abweicht, da zwischen dem nutzbaren Raum und der Heizmatte Fußbodenbeläge angeordnet sein können. Je nach Fußbodenbelag kann ein unterschiedlicher Temperaturkoeffizient vorliegen, welcher die Messung des Temperatursensors der ersten Heizmatte beeinflussen kann.

Im Rahmen der Erfindung ist es ferner denkbar, dass die erste und/oder zweite Heizmatte ein Erfassungsmittel zur, insbesondere kapazitiven, Erfassung eines Ereignisses aufweist. Somit kann durch die Montage der Flächenheizung gleichzeitig eine Montage einer Flächensensorik durch das erfindungsgemäße Montageverfahren durchgeführt werden. Unter dem Ereignis kann vorzugsweise eine Aktivität oder eine Anwesenheit einer Person verstanden werden. Vorzugsweise kann das Erfassungsmittel zur kapazitiven Erfassung des Ereignisses ausgebildet sein. Somit kann das Erfassungsmittel vorzugsweise eine oder zwei Elektroden aufweisen, durch welche ein elektrisches Feld herstellbar ist, wobei eine Kapazität bei der Detektion des Ereignisses gemessen werden kann. Insbesondere können die erste und die zweite Heizmatte sowie weitere Heizmatten jeweils ein Erfassungsmittel aufweisen, welche somit eine Detektion des Ereignisses über eine Fläche des Raumes ermöglichen können. Vorzugsweise können die Erfassungsmittel beim Herstellen der elektrischen Verbindung ebenfalls verbunden werden. Dazu können die Erfassungsmittel über einen elektrischen Anschluss verbindbar sein, durch welche auch die elektrischen Heizmittel verbunden werden oder über einen separaten elektrischen Anschluss, welche einen Datenanschluss umfasst.

Bei einem erfindungsgemäßen Montageverfahren ist es ferner denkbar, dass das Montageverfahren folgenden Schritt umfasst:
- Kalibrieren des Erfassungsmittels der ersten Heizmatte, wobei Ist-Sensordaten ermittelt werden und mit Referenz-Sensordaten verglichen werden oder als Referenz-Sensordaten gespeichert werden.

Vorzugsweise kann das Kalibrieren des Erfassungsmittels lediglich für die erste Heizmatte erfolgen. Somit kann die erste Heizmatte auch als Master in Bezug auf die Erfassungsmittel ausgebildet sein, so dass die Sensordaten der ersten Heizmatte stellvertretend für die Sensordaten der weiteren Heizmatten erfasst werden. Unter den Ist-Sensordaten können die tatsächlich zum Zeitpunkt des Kalibrierens erfassten Messdaten verstanden werden. Die Referenz-Sensordaten können vorgegeben sein oder beispielsweise beim Kalibrieren durch die beim Kalibrieren erfassten Ist-Sensordaten gebildet werden. So kann eine Speichereinheit vorgesehen sein, welche die Referenz-Sensordaten speichert. Beispielsweise ist es denkbar, dass die Ist-Sensordaten als Null-Zustand oder Referenzzustand genutzt werden, bei welchen der Raum leer ist. Eine Abweichung von diesen Sensordaten kann daraufhin auf ein Ereignis schließen lassen. Das Kalibrieren des Erfassungsmittels kann durch eine Steuereinheit und/oder ein separates Kalibriergerät erfolgen.

Bei einem erfindungsgemäßen Montageverfahren ist es ferner denkbar, dass das Montageverfahren folgenden Schritt umfasst:
- Zuschneiden, insbesondere entlang zumindest einer Soll-Schnittlinie, der ersten und/oder der zweiten Heizmatte, so dass die erste und/oder zweite Heizmatte an eine Raumgeometrie angepasst wird und gleichzeitig eine Funktion des elektrischen Heizmittels und/oder des Erfassungsmittels der ersten und/oder zweiten Heizmatte zumindest teilweise erhalten bleibt.

So ist es denkbar, dass die erste und/oder zweite Heizmatte in einer Standardgeometrie angeliefert wird und vor Ort an die Gegebenheiten der Raumgeometrie angepasst werden kann. So ist es denkbar, dass zunächst ein Verlegen der ersten Heizmatte erfolgt und beim Verlegen der zweiten Heizmatte durch den Monteur festgestellt wird, dass die Raumgeometrie, beispielsweise aufgrund eines Kamins, eine Anpassung der Außengeometrie der zweiten Heizmatte erfordert. Daraufhin kann der Monteur die zweite Heizmatte zuschneiden. Für das Zuschneiden können vorzugsweise Soll-Schnittlinien vorgegeben sein, durch welche sichergestellt sein kann, dass beim Schneiden entlang der Linien die Funktion des elektrischen Heizmittels und/oder des Erfassungsmittels zumindest teilweise erhalten bleibt. So ist es denkbar, dass lediglich ein Widerstandselement des elektrischen Heizmittels und/oder ein Sensorelement des Erfassungsmittels abgeschnitten wird, wobei jedoch weitere Widerstandselemente und/oder weitere Sensorelemente der jeweiligen Heizmatte erhalten bleiben. Dadurch kann die Funktion des elektrischen Heizmittels und/oder des Erfassungsmittels gewährleistet bleiben. Insbesondere handelt es sich bei der Funktion des elektrischen Heizmittels dabei um eine Abgabe von Wärme zum Heizen des Raumes und bei der Funktion des Erfassungsmittels um eine Überwachung des Raumes auf ein Ereignis. Insbesondere kann das Zuschneiden entlang von Leiterbahnen und/oder entlang von Datenleitungen erfolgen, welche vorzugsweise mehrfach mit einem oder mehreren elektrischen Anschlüssen verbunden sind, so dass auch beim Zerschneiden einer Verbindung der Datenleitung und/oder der Leiterbahn mit dem elektrischen Anschluss noch eine Kontaktierung nach außen ermöglicht ist. Unter der Soll-Schnittlinie kann ein Bereich verstanden werden, entlang welchem eine vorteilhafte Schnittmöglichkeit geschaffen ist, so dass die Funktion des Heizmittels und/oder des Erfassungsmittels nicht vollständig zerstört wird. Vorzugsweise kann die Soll-Schnittlinie vorgezeichnet und/oder vorperforiert sein, so dass ein Monteur die Soll-Schnittlinie schnell erkennen kann. Ferner können mehrere Soll-Schnittlinien vorgesehen sein. Dadurch kann die Flexibilität der Montagemöglichkeit weiter verbessert sein. Weiterhin ist es denkbar, dass sich die Soll-Schnittlinien beispielsweise aus der Anordnung der Sensorelemente des Erfassungsmittels und/oder der Widerstandselemente des Heizmittels ergeben können, insbesondere wenn die Sensorelemente und/oder die Widerstandselemente in einem regelmäßigen Muster angeordnet sind.

Im Rahmen der Erfindung kann ferner vorgesehen sein, dass das Montageverfahren, insbesondere vor dem Kalibrieren des elektrischen Heizmittels und/oder des Erfassungsmittels, zumindest einen der folgenden Schritte umfasst:
- Aufbringen eines Funktionsbelages auf die erste und zweite Heizmatte, insbesondere wobei der Funktionsbelag ein Estrich ist,
- Aufbringen eines Sichtbelages.

Vorzugsweise kann zunächst das Aufbringen des Funktionsbelages und anschließend das Aufbringen des Sichtbelages auf den Funktionsbelag erfolgen. Durch das Aufbringen des Funktionsbelages kann das Bauelement des Gebäudes mit der Flächenheizung begradigt werden, so dass das Aufbringen des Sichtbelages in einer Ebene erfolgen kann. Bei dem Sichtbelag kann es sich beispielsweise um Fliesen, Laminat, Teppich, Parkett oder dergleichen handeln. Der Funktionsbelag kann vorzugsweise einen Baustoff aufweisen, insbesondere einen Estrich. Dadurch kann die Flächenheizung in einfacher Art und Weise im Fußboden des Raumes verborgen werden, ohne die Optik des Raumes negativ zu beeinflussen. Darüber hinaus ergibt sich durch den Funktionsbelag und/oder den Sichtbelag ein Schutz der Flächenheizung, so dass beispielsweise die Flächenheizung nicht durch Schuhbeläge oder dgl. beschädigt werden kann. Das Kalibrieren des elektrischen Heizmittels und/oder des Erfassungsmittels kann vorzugsweise nach dem Aufbringen des Funktionsbelages und/oder des Sichtbelages durchgeführt werden, so dass die insbesondere finalen Umgebungsbedingungen des Raumes für die Flächenheizung bereits vorhanden oder im Wesentlichen vorhanden sind und somit ein Kalibrieren unter solchen Bedingungen erfolgt, welche auch im Betrieb der Flächenheizung vorliegen können.

Bei einem erfindungsgemäßen Montageverfahren ist vorgesehen, dass das Herstellen einer elektrischen Verbindung der ersten Heizmatte mit der zweiten Heizmatte ein Platzieren einer Verbindungseinheit an einer Verbindungsschnittstelle der ersten Heizmatte und an einer Gegenverbindungsschnittstelle der zweiten Heizmatte umfasst. Die Verbindungseinheit kann insbesondere als eine Zusatzbaugruppe bereitgestellt sein, die erst bei der Montage der Flächenheizung hinzugefügt wird. Durch die Verbindungseinheit kann eine einfache, baustellengerechte Verbindungsmöglichkeit vorgesehen sein. Insbesondere kann die Verbindungsschnittstelle zumindest ein Ausrichtmittel umfassen, durch welches eine Fehlstellung der Verbindungseinheit verhindert wird. Die Verbindungseinheit kann beim Platzieren an der Verbindungsschnittstelle und/oder der Gegenverbindungsschnittstelle am Ausrichtmittel ausgerichtet werden. Das Ausrichtmittel kann Öffnungen und/oder Vorsprünge umfassen, die mit einer Positionierhilfe der Verbindungseinheit korrespondieren. Dabei können vorzugsweise mehrere, besonders bevorzugt drei, Öffnungen und/oder Vorsprünge vorgesehen sein. Durch eine entsprechende Anordnung des Ausrichtmittels kann damit lediglich eine korrekte oder eine korrekte und eine offensichtlich bzw. auffällig falsche Stellung der Verbindungseinheit an der Verbindungsschnittstelle möglich sein. Die Verbindungsschnittstelle kann vorteilhafterweise dazu ausgebildet sein, mit der Verbindungseinheit kraft-, stoff- und/oder formschlüssig verbunden zu werden.

Ein erfindungsgemäßes Montageverfahren umfasst, dass beim Platzieren der Verbindungseinheit die erste und zweite Heizmatte zumindest abschnittsweise zwischen einem flächigen Verbindungskörper der Verbindungseinheit und einem flächigen Befestigungskörper der Verbindungseinheit angeordnet werden, insbesondere so dass die erste und zweite Heizmatte zwischen dem Verbindungskörper und dem Befestigungskörper, vorzugsweise durch eine Magnetkraft zwischen dem Befestigungskörper und dem Verbindungskörper, eingeklemmt werden. Die Magnetkraft kann insbesondere durch Magnete des Befestigungskörpers erzeugt werden und auf Kontaktelemente des Verbindungskörpers wirken. Unter der flächigen Ausgestaltung des Befestigungskörpers und des Verbindungskörpers kann verstanden werden, dass eine Dicke des Befestigungskörpers und des Verbindungskörpers gering im Vergleich zu den Abmessungen der Grundfläche des Befestigungskörpers und des Verbindungskörpers ist. Insbesondere handelt es sich bei dem Befestigungskörper und dem Verbindungskörper somit um flache Bauteile, die vorzugsweise lokale Erhöhungen aufweisen können. Durch die Verbindungseinheit wird dadurch die flächige Erstreckung der Flächenheizung nicht wesentlich beeinflusst, so dass die erste und zweite Heizmatte und/oder die Flächenheizung flach im Raum, insbesondere im Fußboden, verlegt werden kann. Ferner ist durch den Verbindungskörper und den Befestigungskörper eine vorteilhafte Befestigungsmöglichkeit der Verbindungseinheit an der ersten und zweiten Heizmatte gegeben, die intuitiv beim Verlegen bedient werden kann. Insbesondere stellt die Verbindungseinheit somit eine einfache Möglichkeit dar, die interne Verbindungsschnittstelle mit der externen Gegenverbindungsschnittstelle auf sichere Art und Weise zu verbinden. Vorzugsweise kann der Verbindungskörper auf einer den Kontaktabschnitten gegenüberliegenden Seite elektrisch isoliert sein. Weiterhin ist es denkbar, dass am Befestigungskörper eine Klebeschicht angeordnet ist, die sich über einen Rand des Befestigungskörpers erstreckt. Somit kann vorgesehen sein, dass der Befestigungskörper durch die Klebeschicht stoffschlüssig an der ersten und zweiten Heizmatte befestigt wird, insbesondere angeklebt wird. Der Verbindungskörper kann einen ersten Kontaktabschnitt zum Kontaktieren eines Verbindungsmittels einer Verbindungsschnittstelle der ersten Heizmatte und einem zweiten Kontaktabschnitt zum Kontaktieren eines Gegenverbindungsmittels der zweiten Heizmatte aufweisen. Der Befestigungskörper kann den Verbindungskörper an der ersten und/oder zweiten Heizmatte befestigen. Dabei weisen der erste und zweite Kontaktabschnitt des Verbindungskörpers vorzugsweise jeweils zumindest ein erstes Kontaktelement zum Herstellen der elektrischen Verbindung für das Heizmittel der ersten und/oder zweiten Heizmatte auf. Die ersten Kontaktelemente können ferner elektrisch miteinander verbunden sein. Zur Befestigung der Verbindungseinheit an der ersten und/oder zweiten Heizmatte kann der Befestigungskörper vorzugsweise auf einer ersten Seite der ersten und/oder zweiten Heizmatte und der Verbindungskörper auf einer zweiten Seite der ersten und/oder zweiten Heizmatte angeordnet werden.

Gemäß einem weiteren Aspekt der Erfindung ist eine Flächenheizung, insbesondere eine Fußbodenheizung beansprucht. Dabei ist die Flächenheizung durch ein erfindungsgemäßes Montageverfahren in einem Raum eines Gebäudes montierbar ist. Somit ergeben sich für eine erfindungsgemäße Flächenheizung die gleichen Vorteile, wie sie bereits ausführlich mit Bezug auf ein erfindungsgemäßes Montageverfahren beschrieben worden sind.

Gemäß einem weiteren Aspekt der Erfindung ist eine Anordnung aus einer Flächenheizung, insbesondere Fußbodenheizung, und einem Raum eines Gebäudes vorgesehen. Dabei ist die Flächenheizung durch ein erfindungsgemäßes Montageverfahren in dem Raum des Gebäudes montiert.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Figur 1: einen schematischen Aufbau einer Heizmatte für eine Flächenheizung gemäß einem ersten Ausführungsbeispiel in schematischer geschnittener Ansicht,
- Figur 2: eine Draufsicht auf eine erste Grundseite einer Basiseinheit der Heizmatte des ersten Ausführungsbeispiels,
- Figur 3: eine schematische Darstellung eines Erfassungsmittels der Heizmatte des ersten Ausführungsbeispiels,
- Figur 4: eine mögliche Erfassung eines Ereignisses in zeitlicher Abfolge mit der Heizmatte des ersten Ausführungsbeispiels,
- Figur 5: die Heizmatte des ersten Ausführungsbeispiels in einer weiteren schematischen geschnittenen Ansicht,
- Figur 6: eine weitere geschnittene schematische Ansicht der Heizmatte des ersten Ausführungsbeispiels im Randbereich,
- Figur 7: eine mögliche Biegung der Heizmatte des ersten Ausführungsbeispiels in schematischer Ansicht,
- Figur 8: eine erfindungsgemäße Flächenheizung gemäß einem weiteren ersten Ausführungsbeispiel in schematischer Darstellung,
- Figur 9: ein Raum eines Gebäudes mit einer erfindungsgemäßen Flächenheizung in einem weiteren Ausführungsbeispiel in schematischer Darstellung,
- Figur 10: eine schematische Darstellung von Verfahrensschritten eines erfindungsgemäßen Montageverfahrens für eine erfindungsgemäße Flächenheizung in schematischer Darstellung in einem ersten Ausführungsbeispiel,
- Figur 11a-g: eine weitere schematische Darstellung der Verfahrensschritte des erfindungsgemäßen Montageverfahrens des ersten Ausführungsbeispiels,
- Figur 12: einen schematischen Aufbau einer erfindungsgemäßen Heizmatte gemäß einem weiteren Ausführungsbeispiel in schematischer geschnittener Ansicht,
- Figur 13: eine Draufsicht auf ein Heizmittel der erfindungsgemäßen Heizmatte gemäß Figur 12,
- Figur 14: eine schematische Darstellung eines Erfassungsmittels der erfindungsgemäßen Heizmatte gemäß Figur 12,
- Figur 15: die erfindungsgemäße Heizmatte gemäß Figur 12 in einer weiteren schematischen geschnittenen Ansicht,
- Figur 16a-c: die erfindungsgemäße Heizmatte gemäß Figur 12 mit einer Verbindungseinheit.

In den nachfolgenden Figuren werden für die gleichen technischen Merkmale auch von unterschiedlichen Ausführungsbeispielen die identischen Bezugszeichen verwendet.

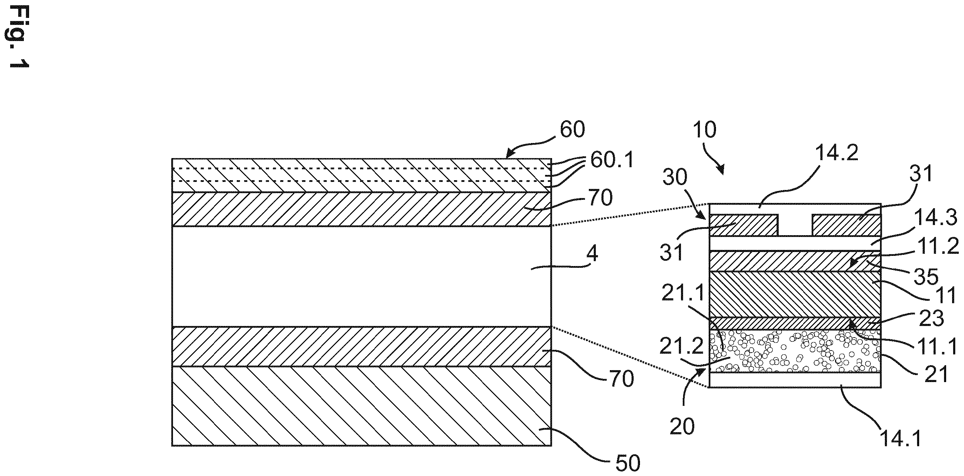

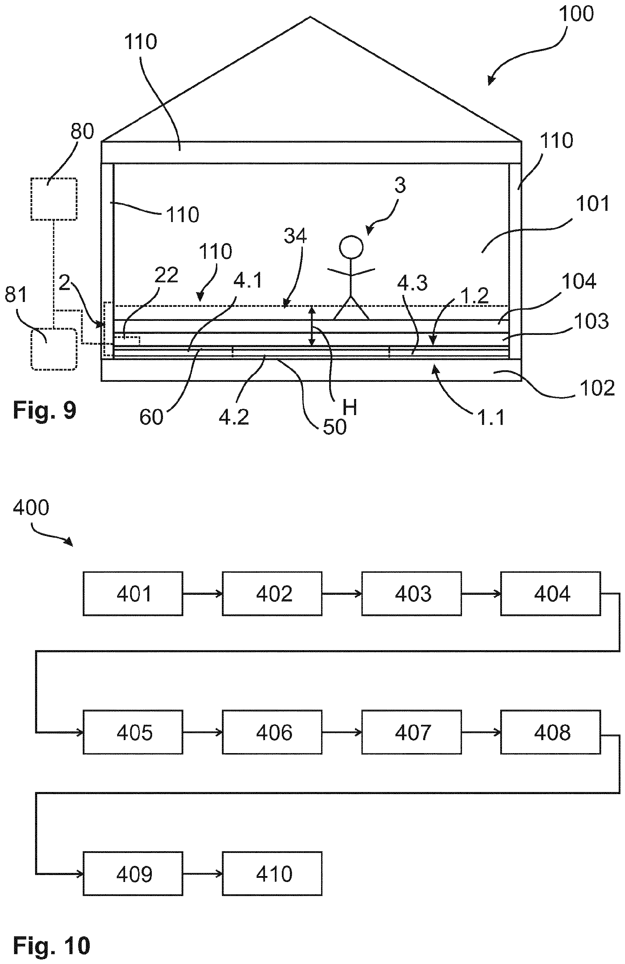

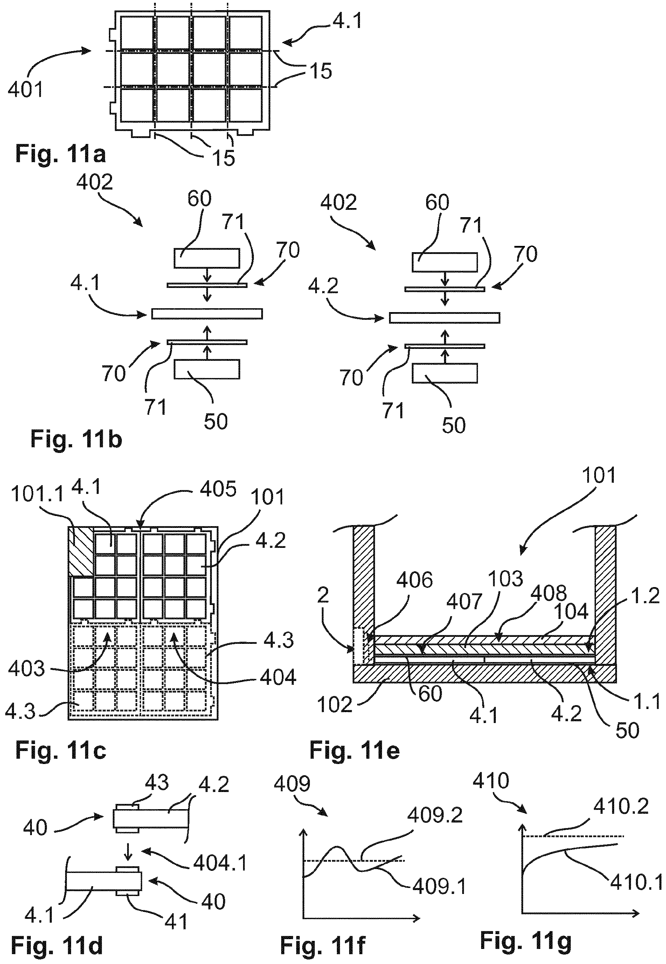

In den Figuren 1 bis 7 und 12 bis 16 wird der Aufbau bzw. eine Funktionsweise einer Heizmatte 4 beschrieben, welche vorteilhafterweise durch ein erfindungsgemäßes Verfahren 500 verlegbar ist. Insbesondere kann eine erste Heizmatte 4.1 bei dem Verfahren 500 des Ausführungsbeispiels der Figuren 10 und 11a-g, der in den Figuren 1 bis 7 oder 12 bis 16 beschriebene Heizmatte entsprechen. Ferner kann die zweite und/oder jede weitere im Rahmen des erfindungsgemäßen Verfahrens 500 des Ausführungsbeispiels der Figuren 10 und 11a-g verwendete Heizmatte 4.2, 4.3 entsprechend der Figuren 1 bis 7 oder 12 bis 16 oder analog dazu aufgebaut sein.

Figur 1 zeigt einen schematischen Aufbau einer Heizmatte 4 mit einer Detailansicht einer Basiseinheit 10 der Heizmatte 4. Die Basiseinheit 10 bildet dabei insbesondere einen Kern der Heizmatte 4. Die Basiseinheit 10 umfasst ein erstes Trägerelement 11, welches eine flächige Erstreckung mit einer ersten und einer zweiten Grundseite 11.1, 11.2 aufweist. Damit ist das erste Trägerelement 11 zum Verlegen der Heizmatte 4, beispielsweise als Teil eines Begrenzungselementes 110 des Raumes 101, insbesondere eines Fußbodens, eines Gebäudes 100 geeignet. Die erste Grundseite 11.1 bildet vorzugsweise eine Unterseite des ersten Trägerelementes 11, wenn die Heizmatte 4 im Gebäude 100 als Fußbodenheizung verbaut wird. In diesem Fall bildet entsprechend vorzugsweise die zweite Grundseite 11.2 die Oberseite des ersten Trägerelementes 11. Auf der ersten Grundseite 11.1 ist ein elektrisches Heizmittel 20 zur Abgabe von Wärme vorgesehen. Das elektrische Heizmittel 20 weist ein Widerstandselement 21 auf, welches sich auf der ersten Grundseite 11.1 des ersten Trägerelementes 11 erstreckt und vorzugsweise flächig, insbesondere plattenartig, ausgestaltet ist. Ferner weist das elektrische Heizmittel 20 ein Heizleitelement 23 auf, durch welches das Widerstandselement 21 mit einem elektrischen Anschluss 40 der Heizmatte 4 verbunden ist. Das Heizleitelement 23 und/oder das Widerstandselement 21 können auf das erste Trägerelement 11 aufgedruckt sein. Vorzugsweise ist dabei zunächst das Heizleitelement 23 direkt auf das erste Trägerelement 11 und das Widerstandselement 21 zumindest bereichsweise auf das Heizleitelement 23 und/oder zumindest bereichsweise auf das erste Trägerelement 11 aufgedruckt. Somit kann das Widerstandselement 21, welches vorzugsweise plattenartig ausgestaltet sein kann, sich über das Heizleitelement 23 erstrecken. Dabei kann das Heizleitelement 23 beispielsweise als schmaler Streifen vorgesehen sein, so dass das Widerstandselement 21 zum Teil auf das Heizleitelement 23 direkt aufgebracht ist und zum Teil auf das erste Trägerelement 11 direkt aufgebracht ist. Insbesondere sind das Heizleitelement 23 und das Widerstandselement 21 stoffschlüssig mit dem ersten Trägerelement 11 und/oder untereinander verbunden. Um den elektrischen Widerstand des Heizleitelementes 23 gering zu halten, weist das Heizleitelement 23 insbesondere ein Edelmetall, vorzugsweise Silber, auf. Das Widerstandselement 21 ist dazu ausgebildet, Wärme abzugeben, wenn es bestromt wird. Die abgegebene Wärme resultiert dabei insbesondere aus dem Widerstand des Widerstandselementes 21. Insbesondere weist das Widerstandselement 21 dazu eine Karbonpaste auf, welche Kohlenstoff 21.1 und/oder einen Füllstoff 21.2 aufweist. Der Kohlenstoff 21.1 kann vorzugsweise in gemahlener Form vorliegen. Der Füllstoff 21.2 dient ferner dazu, die Leitfähigkeit des Widerstandselementes 21 einzustellen, wobei die Leitfähigkeit des Widerstandselementes 21 zur Mengenzugabe des Füllstoffes 21.2 der Karbonpaste korrespondiert. Zur elektrischen Isolation zur Außenseite der Basiseinheit 10 ist ferner eine erste Schutzschicht 14.1 vorgesehen, welche das elektrische Heizmittel 20 zumindest bereichsweise überdeckt. Insbesondere kann die erste Schutzschicht 14.1 einen Lack, vorzugsweise einen Fotolack, umfassen.

Auf der zweiten Grundseite 11.2 des ersten Trägerelementes 11 weist die Basiseinheit 10 ein kapazitives Erfassungsmittel 30 zur Detektion eines Ereignisses 3 auf. Das Erfassungsmittel 30 umfasst dabei eine Datenleitung 35, welche insbesondere direkt auf das erste Trägerelement 11 aufgebracht ist. Die Datenleitung 35 kann dabei zur Stromversorgung und/oder Datenkommunikation des Erfassungsmittels 30 dienen. Dazu kann die Datenleitung 35 vorzugsweise mehrere, insbesondere parallel verlaufende, Datenleiter umfassen, durch welche z.B. ein Daten-BUS bereitstellbar sein kann. Ferner umfasst das Erfassungsmittel 30 eine zwei Elektroden 31, zwischen welchen ein elektrisches Feld generierbar ist. Insbesondere können die beiden Elektroden 31 mit der Datenleitung 35 bereichsweise verbunden sein. Zur elektrischen Isolation, insbesondere weiterer Bereiche, kann ferner zwischen den Elektroden 31 und der Datenleitung 35 eine weitere Schutzschicht 14.3 vorgesehen sein. Dadurch kann sichergestellt sein, dass die Elektroden 31 und die Datenleitung 35 lediglich in einigen Kontaktabschnitten miteinander kontaktieren und somit das elektrische Feld nicht oder nur geringfügig durch die Datenleitung 35 beeinflusst wird. Zur elektrischen Isolation des Erfassungsmittels 30 gegenüber der Umwelt ist ferner eine zweite Schutzschicht 14.2 vorgesehen, welche zumindest bereichsweise das Erfassungsmittel 30 überdeckt. Vorzugsweise kann das Erfassungsmittel 30 mittelbar oder unmittelbar auf die zweite Grundseite 11.2 des ersten Trägerelementes 11 aufgebracht sein. Insbesondere können die Elektroden 31 und/oder die Datenleitung 35 durch ein Druckverfahren stoffschlüssig mit dem ersten Trägerelement 11 verbunden sein. Die zweite Schutzschicht 14.2 sowie die weitere Schutzschicht 14.3 können insbesondere lackiert sein und/oder durch ein Druckverfahren, vorzugsweise als Fotolack, aufgebracht sein.

Durch den beschriebenen Aufbau der Basiseinheit 10 ist diese flexibel, so dass sich die Handhabung der Heizmatte 4 von der Handhabung einer starren Platte unterscheiden kann. Dies ist insbesondere bei der Handhabung auf einer Baustelle günstig, da beispielsweise eine Person die Heizmatte 4 tragen kann, die Heizmatte 4 in einem Stapel mit weiteren Heizmatten 4 angeliefert werden kann und/oder eine Bruchgefahr der Heizmatte 4 reduziert sein kann. Insbesondere bildet die Basiseinheit 10 einen folienartigen, vorzugsweise feuchtigkeitsundurchlässigen Verbund. Um die Basiseinheit 10 weiterhin vor Feuchtigkeit zu schützen, ist ferner insbesondere mittelbar auf der zweiten Grundseite 11.2 des ersten Trägerelementes 11 auf der Heizmatte 4 eine Abdichtungsschicht 60, insbesondere auf der Basiseinheit 10, angeordnet. Dazu ist eine Klebeschicht 70 zwischen der Basiseinheit 10 und der Abdichtungsschicht 60 angeordnet, um die Abdichtungsschicht 60 auf der Basiseinheit 10 zu befestigen. Ferner weist die Abdichtungsschicht 60 mehrere Faserschichten 60.1 auf, so dass eine Dichtigkeit der Abdichtungsschicht 60 durch die mehreren Faserschichten 60.1 gesteigert sein kann. Insbesondere kann die Abdichtungsschicht 60 ein Vlies aufweisen. Auf der ersten Grundseite 11.1 des ersten Trägerelementes 11 ist ferner eine Schalldämpfungsschicht 50 auf der Heizmatte 4, insbesondere der Basiseinheit 10, befestigt. Dazu ist zwischen der Schalldämpfungsschicht 50 und der Basiseinheit 10 ferner ebenfalls eine Klebeschicht 70 vorgesehen, um eine stoffschlüssige Verbindung der Basiseinheit 10 und der Schalldämpfungsschicht 50 zu gewährleisten. Die Schalldämpfungsschicht 50 wirkt sich insbesondere bei Verwendung der Heizmatte 4 als Fußbodenheizung positiv auf die Schallübertragung aus, so dass ein Trittschall reduziert wird. Durch die Ausbildung der Basiseinheit 10 mit dem Erfassungsmittel 30 in einem schichtartigen Verbund kann die Basiseinheit 10 zur Ausgestaltung einer Flächensensorik 1.2 flächig verlegt werden. Durch das elektrische Heizmittel 20 kann die Basiseinheit 10 zur Ausgestaltung einer erfindungsgemäßen Flächenheizung 1.1 flächig verlegt werden. Insbesondere ist somit eine Doppelfunktionalität der Heizmatte 4 gegeben, so dass bei einer Verlegung der Heizmatte 4 zum einen die Flächenheizung 1.1 ausgestaltet werden kann und zum anderen die Flächensensorik 1.2. Somit ist insbesondere lediglich eine Montage der Heizmatte 4 notwendig, um zum einen eine Sensorfunktionalität und zum anderen eine Heizfunktionalität innerhalb eines Raumes 101 des Gebäudes 100 zu realisieren. Insbesondere umfasst die Darstellung der Figur 1 lediglich schematisch einen Bereich der Heizmatte 4 in geschnittener Ansicht, wobei der Schichtaufbau z.B. eine Bedruckungsreihenfolge während der Herstellung der Heizmatte 4 abbilden kann. Insbesondere können sich zumindest die Schalldämpfungsschicht 50 und/oder die Abdichtungsschicht 60 und/oder die Schutzschichten 14.1, 14.2, 14.3 vollflächig oder abschnittsweise vollflächig über die flächige Erstreckung der Heizmatte 4 erstrecken

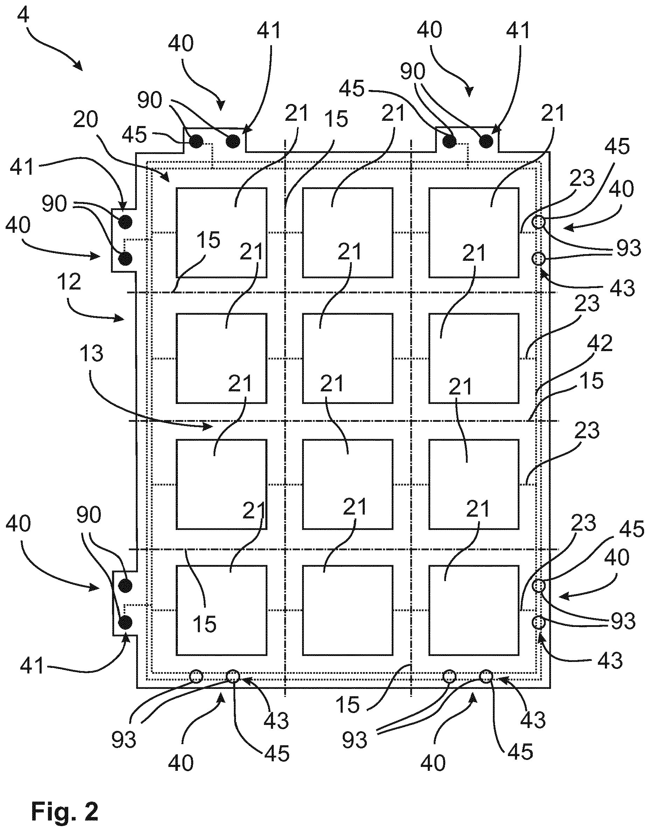

Figur 2 zeigt eine schematische Draufsicht auf die Basiseinheit 10 der Heizmatte 4 des ersten Ausführungsbeispiels auf die erste Grundseite 11.1 des ersten Trägerelementes 11. Dabei ist gezeigt, dass die Heizmatte 4 mehrere flächig, insbesondere plattenartig, ausgestaltete Widerstandselemente 21 in einem regelmäßigen Verteilungsmuster aufweist. Die Widerstandselemente 21 sind dabei über Heizleitelemente 23 mit zumindest einer in einem Randbereich 12 der Basiseinheit 10 verlaufenden Leiterbahn 42, vorzugsweise mehreren Leiterbahnen 42, verbunden. Durch die Leiterbahn 42 sind dabei die Widerstandselemente 21 mit Heizanschlüssen 45 verbunden, welche Teil von elektrischen Anschlüssen 40 sein können, die im Randbereich 12 der Basiseinheit 10 angeordnet sind. Die Widerstandselemente 21 befinden sich in einem Mittenbereich 13 der Basiseinheit 10. Die Leiterbahn 42 ist ferner umlaufend in dem Randbereich 12 vorgesehen. Dadurch kann die Heizmatte 4 in einfacher Art und Weise an eine spezielle Geometrie eines Raumes, wie beispielsweise einen Erker, angepasst werden, indem ein Teilbereich der Basiseinheit 10 abgeschnitten wird. Dadurch, dass mehrere elektrische Anschlüsse 40 vorgesehen sind und die Leiterbahn 42 umlaufend ausgebildet ist, kann somit zumindest ein Teil der Funktionalität des elektrischen Heizmittels 20 erhalten bleiben, wenn einzelne Widerstandselemente 21 und/oder einzelne elektrische Anschlüsse 40 abgeschnitten werden. Für zumindest Teile der übrigen Widerstandselemente 21 bleibt vorzugsweise zumindest ein elektrischer Anschluss 40 und die entsprechende Kontaktierung über die Leiterbahn 42 erhalten. Vorzugsweise ist die Heizmatte 4 dabei als Heizmodul ausgebildet, um mit weiteren Heizmodulen zur Flächenheizung 1.1 und/oder zur Flächensensorik 1.2 verbunden zu werden. Um eine einfache Möglichkeit der elektrischen Verbindung bereitzustellen, weisen die elektrischen Anschlüsse 40 Verbindungsschnittstellen 41 und/oder Gegenverbindungsschnittstellen 43 auf. Insbesondere können die Verbindungsschnittstellen 41 mit Gegenverbindungsschnittstellen 43 weiterer Heizmatten verbindbar sein. Dazu kann jede Verbindungsschnittstelle zumindest ein, bevorzugt mehrere, Verbindungsmittel 90 aufweisen und jede Gegenverbindungsschnittstelle ein, bevorzugt mehrere, Gegenverbindungsmittel 93. Vorzugsweise kann die Verbindungsschnittstelle 41 und/oder die Gegenverbindungsschnittstelle 43 zur reversiblen mechanischen Befestigung ausgebildet sein. Insbesondere kann somit das Verbindungsmittel als Druckknopf ausgebildet sein und/oder das Gegenverbindungsmittel 93 als Öse. Dadurch kann eine elektrische Verbindung der Heizmatte 4 mit einer Energiequelle 2 und/oder einer Steuereinheit 22 schnell und zuverlässig verbindbar sein.

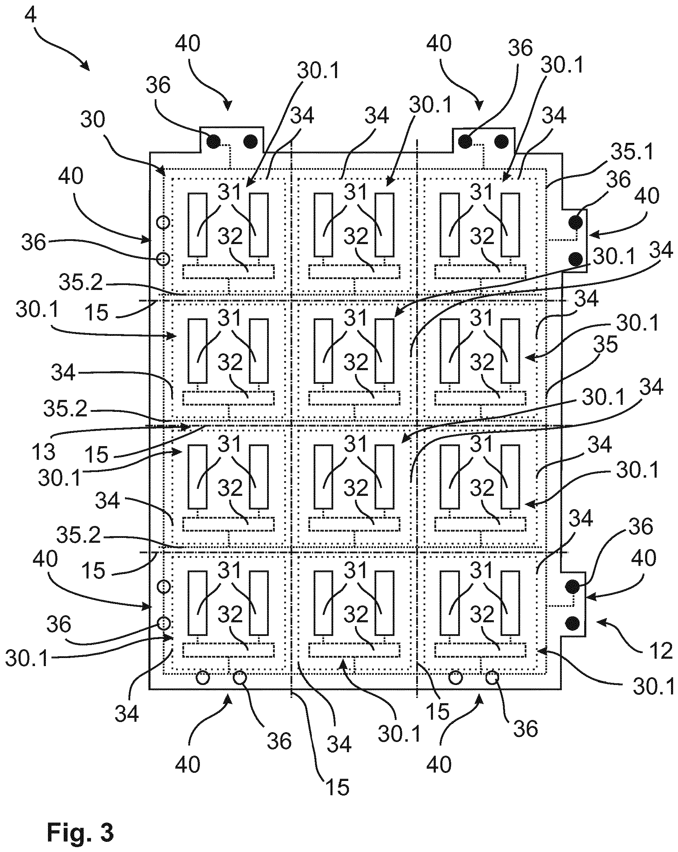

Insbesondere ist jedem Widerstandselement 21 des elektrischen Heizmittels 20 ein Sensorelement 30.1 zugeordnet. Dadurch kann ferner die Zuschneidbarkeit der Heizmatte 4 weiter vereinfacht sein, so dass eine Zuschneidung entsprechend genauso viele Sensorelemente 30.1 abtrennt, wie Widerstandselemente 21. Das Erfassungsmittel 30 ist schematisch in einer Draufsicht auf die zweite Grundseite 11.2 des ersten Trägerelementes 11 in Figur 3 dargestellt. Das Erfassungsmittel 30 weist dabei die Sensorelemente 30.1 auf, welche jeweils zwei Elektroden 31 aufweisen, um ein elektrisches Feld generieren zu können. Jedes Sensorelement 30.1 ist mit einer dezentralen Auswerteeinheit 32 verbunden. Die dezentrale Auswerteeinheit 32 ist ferner in der Nähe der jeweiligen Sensorelemente 30.1 angeordnet, so dass eine Verbindungsstrecke zwischen den Sensorelementen 30.1 und der jeweiligen Auswerteeinheit 32 gering gehalten werden kann. Insbesondere ist die dezentrale Auswerteeinheit 32 dazu ausgebildet, analoge Messsignale der Sensorelemente 30.1 in digitale Signale umzuwandeln. Ferner sind die dezentralen Auswerteeinheiten 32 mit einer Datenleitung 35 verbunden. Die Datenleitung 35 weist ferner einen Versorgungsabschnitt 35.2 und einen Ringabschnitt 35.1 auf. Der Ringabschnitt 35.1 ist dabei insbesondere zumindest teilweise parallel zur Leiterbahn 42, umlaufend in dem Randbereich 12 der Basiseinheit 10 angeordnet. Der Versorgungsabschnitt 35.2 ist insbesondere parallel zum Heizleitelement 23, zumindest teilweise im Mittenbereich 13 der Basiseinheit 10 angeordnet. Somit können die Auswerteeinheiten 32 über den Versorgungsabschnitt 35.2 mit dem Ringabschnitt 35.1 verbunden sein. Vorzugsweise kann jeder Versorgungsabschnitt 35.2 den Ringabschnitt 35.1 mehrfach kontaktieren. Somit ergibt sich ebenfalls eine vorteilhafte Zuschneidbarkeit der Heizmatte 4, so dass beispielsweise auch beim Abschneiden eines oberen Bereiches der Heizmatte 4 die Funktionalität von verbleibenden Sensorelementen 30.1 erhalten bleiben kann. Der Ringabschnitt 35.1 ist dazu ferner mit mehreren Datenanschlüssen 36 verbunden, welche Teil der elektrischen Anschlüsse 40 für das elektrische Heizmittel 20 sein können oder separate elektrische Anschlüsse 40 bilden können. Insbesondere kann die Datenleitung 35 mehrere Datenleitungen aufweisen, welche parallel verlaufen, um beispielsweise unterschiedliche Daten übertragen zu können und/oder einen Bus zur Verfügung zu stellen. Ferner sind in gestrichelter Darstellung Erfassungsbereiche 34 des Erfassungsmittels 30 der Heizmatte 4 dargestellt, welche durch die Sensorelemente 30.1 überwachbar sind.

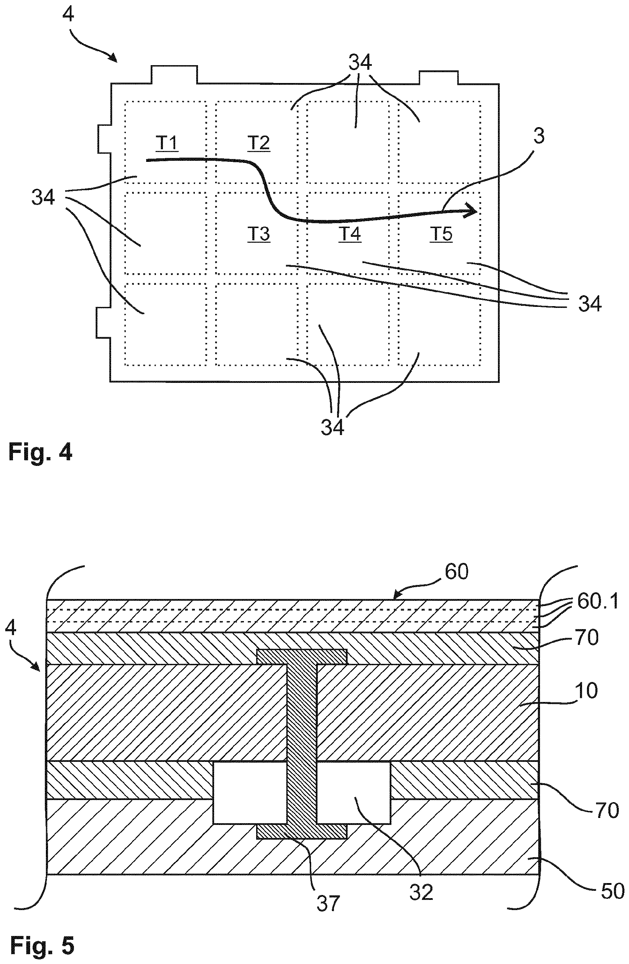

Figur 4 zeigt schematisch mehrere Erfassungsbereiche 34, welche jeweils durch die Sensorelemente 30.1 generierbar sein können. Um beispielsweise ein Verhalten einer Person oder eine Anwesenheit einer Person als Ereignis 3 detektieren zu können, kann vorgesehen sein, die Erfassungsbereiche 34 einzeln zu überwachen und insbesondere zu unterschiedlichen Zeitpunkten T1 bis T5 auszuwerten. Somit kann beispielsweise ein Ereignis 3 in Form einer Bewegung einer Person verfolgt werden, so dass sich der Einsatz der Flächensensorik 1.2 der Heizmatte 4 insbesondere auch für gewerbliche Anwendungen derart eignet, dass Besucherströme in ihrem Verhalten analysiert werden können. Dadurch kann beispielsweise eine Erkenntnis gewonnen werden, ob ein Produkt besonders interessant auf Besucher wirkt oder dergleichen.

Figur 5 zeigt ferner eine mögliche Verbindung der dezentralen Auswerteeinheit 32 mit den Sensorelementen 30.1 des Erfassungsmittels 30. Insbesondere kann die dezentrale Auswerteeinheit 32 dabei auf der ersten Grundseite 11.1 des ersten Trägerelementes 11 vorgesehen sein, auf welche auch das elektrische Heizmittel 20 angeordnet ist. Eine Verbindung der Sensorelemente 30.1 mit der dezentralen Auswerteeinheit 32 durch das erste Trägerelement 11 hindurch kann dabei in besonders einfacher Form durch jeweils ein Durchgangselement 37 gewährleistet werden, welches insbesondere als Niet ausgestaltet sein kann. Dies kann die Serienfertigung der Heizmatte 4 weiter begünstigen. Dabei kann gleichzeitig eine Befestigung der dezentralen Auswerteeinheit 32 mit der Basiseinheit 10 erfolgen. Insbesondere kann ferner die Auswerteeinheit 32 vorteilhafterweise in die Schalldämpfungsschicht 50 eingebettet sein, welche besonders nachgiebig ausgebildet sein kann und somit einen elastischen Schutz bei Belastung der Heizmatte 4, beispielsweise durch die Bewegung einer Person, bieten kann.

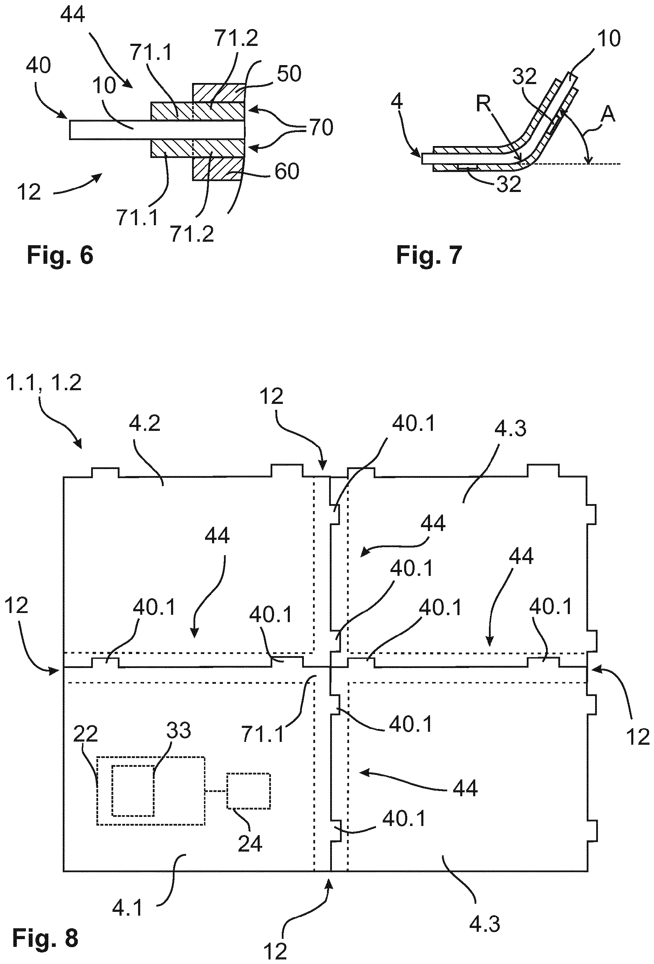

Figur 6 zeigt ferner einen Randbereich 12 der Heizmatte 4 des ersten Ausführungsbeispiels in schematischer Darstellung. Dabei ist die Basiseinheit 10 mit einem der elektrischen Anschlüsse 40 gezeigt. Ferner ist in dem Randbereich ein Teil der Klebeschichten 70 angeordnet. Zumindest eine der Klebeschichten 70 weist dabei einen ersten Klebebereich 71.1 als Befestigungsschnittstelle 44 zum Verbinden der Heizmatte 4 mit weiteren Heizmatten und/oder weiteren Komponenten der Flächenheizung 1.1 auf. Ferner ist ein zweiter Klebebereich 71.2 vorgesehen, durch welchen die Basiseinheit 10 mit der Abdichtungsschicht 60 und/oder der Schalldämpfungsschicht 50 verbunden ist. Somit lassen sich in einfacher Art und Weise mehrere Funktionen durch die jeweilige Klebeschicht erfüllen.

Figur 7 zeigt die erfindungsgemäße Heizmatte 4 des ersten Ausführungsbeispiels mit einer möglichen Biegung. Dabei ist die Heizmatte 4 um einen Biegewinkel A biegbar. Dies ist insbesondere deshalb möglich, weil die Basiseinheit 10 flexibel ausgestaltet ist. Vorzugsweise kann der erreichbare Biegewinkel A größer oder gleich 10°, vorzugweise größer oder gleich 45°, besonders bevorzugt größer oder gleich 90° sein. Der erreichbare Biegewinkel kann sich insbesondere auf eine Horizontale beziehen, wenn die Heizmatte 4 zumindest bereichsweise, z.B. auf einem Fußboden, aufliegt. Dabei kann jedoch ferner ein Biegeradius R vorgesehen sein, welcher verdeutlicht, dass der Biegewinkel A von einem Knick zu unterscheiden ist. Insbesondere können ferner die dezentralen Auswerteeinheiten 32 starr ausgebildet sein, so dass eine Biegung zwischen den dezentralen Auswerteeinheiten 32 möglich ist.

Figur 8 zeigt ferner eine Verbindung einer ersten Heizmatte 4.1 mit einer zweiten Heizmatte 4.2 sowie mit weiteren Heizmatten 4.3. Die Heizmatten 4.1, 4.2, 4.3 bilden dabei eine erfindungsgemäße Flächenheizung 1.1 gemäß einem weiteren Ausführungsbeispiel und eine entsprechende Flächensensorik 1.2. Untereinander sind die Heizmatten 4.1, 4.2, 4.3 durch elektrische Anschlüsse 40 verbunden, durch welche jeweils eine elektrische Verbindung 40.1 hergestellt sein kann. Die elektrische Verbindung 40.1 kann dabei eine Energieversorgung und/oder eine Datenverbindung zur Verfügung stellen. Die erste Heizmatte 4.1 ist vorzugsweise als Masterelement ausgebildet, welche direkt mit der Steuereinheit 22 in Kommunikationsverbindung stehen kann. Insbesondere kann das Masterelement einen Temperatursensor 24 zum Kalibrieren und/oder Justieren der Flächenheizung 1.1 aufweisen. Ferner ist dargestellt, dass die Heizmatten 4.1, 4.2, 4.3 in ihren Randbereichen 12 überlappen. Insbesondere können die Randbereiche 12 jeweils erste Klebebereiche 71.1 aufweisen, welche eine Befestigungsschnittstelle 44 bilden können. Durch die Befestigungsschnittstellen 44 sind die Heizmatten 4.1, 4.2, 4.3 insbesondere untereinander befestigbar. Die Steuereinheit 22, welche mit dem Masterelement in Verbindung steht, kann ferner ein zentrales Steuergerät 33 aufweisen, durch welches vorzugsweise eine Heizleistung der Heizmatten 4.1, 4.2, 4.3 und eine Detektion von Ereignissen 3 der Heizmatten 4.1, 4.2, 4.3 steuerbar bzw. auswertbar sein können. Vorzugsweise kann das zentrale Steuergerät 33 in einer Unterputzdose eines Raumes 101 eines Gebäudes 100 vorgesehen sein.

Figur 9 zeigt ferner ein Gebäude 100 mit einem Raum 101, welcher durch eine erfindungsgemäße Flächenheizung 1.1 gemäß einem weiteren Ausführungsbeispiel beheizbar ist und durch eine Flächensensorik 1.2 zumindest bereichsweise überwachbar ist. Das Überwachen des Raumes 101 kann dabei eine Detektion eines Ereignisses 3 umfassen, wobei das Ereignis 3 vorzugsweise eine Aktivität einer Person umfassen kann. Insbesondere kann die Aktivität der Person ein Aufenthalt der Person sein. Insbesondere kann ferner die Flächensensorik 1.2 zur kapazitiven Detektion des Ereignisses 3 ausgebildet sein. Die Flächenheizung 1.1 und die Flächensensorik 1.2 sind dabei durch eine erste Heizmatte 4.1, eine zweite Heizmatte 4.2 sowie weitere Heizmatten 4.3 ausgebildet, vorzugsweise durch einen Verbund mehrerer Heizmatten gemäß des ersten Ausführungsbeispiels. Dazu sind die Heizmatten 4.1, 4.2, 4.3 auf einem Bauelement 102 des Gebäudes 100 angeordnet. Das Bauelement 102 kann vorzugsweise ein Fußbodenrohbauteil sein. Auf den Heizmatten 4.1, 4.2, 4.3 ist ferner ein Funktionsbelag 103, welcher vorzugsweise ein Estrich sein kann, sowie ein Sichtbelag 104, welcher beispielsweise Fliesen und/oder Teppich und/oder Laminat und/oder dergleichen umfassen kann, angeordnet. Die Flächensensorik 1.2 und/oder die Flächenheizung 1.1 können dabei mit einer externen Recheneinheit 80 und/oder einem mobilen Endgerät 81 verbunden und/oder verbindbar sein. Dadurch kann beispielsweise eine Fernsteuerung der Flächenheizung 1.1 und/oder eine Fernüberwachung der Flächensensorik 1.2 durch einen Benutzer auch außerhalb des Gebäudes 100 und/oder in einem anderen Raum des Gebäudes 100 durchgeführt werden. Vorzugsweise können Erfassungsbereiche 34 zur Detektion des Ereignisses vorgesehen sein, welche ausgehend von Sensorelementen 30.1 der Heizmatten 4.1, 4.2, 4.3 eine Höhe H von größer oder gleich 10 mm, vorzugsweise von größer oder gleich 25mm, besonders bevorzugt von größer oder gleich 40 mm, aufweisen.

Figur 10 zeigt einen Ablauf eines erfindungsgemäßen Montageverfahrens 400 in schematischer Darstellung von Verfahrensschritten 401 bis 410 in einem weiteren Ausführungsbeispiel. Die Figuren 11a bis g zeigen ferner die Verfahrensschritte 401 bis 410 in bebildeter Darstellung.

Das Montageverfahren 400 umfasst ein Zuschneiden 401 der ersten Heizmatte 4.1, welche in einem Raum 101 eines Gebäudes 100 verlegt werden soll. Wie in Figur 11c dargestellt, weist der Raum 101 eine spezielle Raumgeometrie 101.1 auf, welche beispielsweise durch einen Verlauf eines Kamins am Raum 101 bedingt sein kann. Um eine Fläche des Raumes 101 trotz der Raumgeometrie 101.1 möglichst umfassend mit einer Flächenheizung 1.1 und/oder einer Flächensensorik 1.2 auszustatten, ist es vorteilhaft, eine Heizmatte 4.1 der Flächenheizung 1.1 entsprechend der Raumgeometrie 101.1 gemäß einem Verfahrensschritt 401 zuzuschneiden. Dabei kann beispielsweise entlang von vorgegebenen Soll-Schnittlinien 15 das Zuschneiden 401 der ersten Heizmatte 4.1 erfolgen, so dass eine Funktion der ersten Heizmatte 4.1 erhalten bleibt. So ist es denkbar, dass die erste Heizmatte 4.1, ein elektrisches Heizmittel 20 zum Erwärmen des Raumes 101 aufweist und ein Erfassungsmittel 30 zum Detektieren eines Ereignisses 3 innerhalb des Raumes 101. Die Soll-Schnittlinien 15 können somit entlang von einzelnen Sensorelementen 30.1 des Erfassungsmittels 30 und/oder entlang von einzelnen Widerstandselementen 21 des elektrischen Heizmittels 20 verlaufen. Dadurch kann die Funktion der verbleibenden Widerstandselemente 21 und/oder der verbleibenden Sensorelemente 30.1 erhalten bleiben, insbesondere wenn diese weiterhin mit einem elektrischen Anschluss 40 verbunden sind. Vor oder nach dem Zuschneiden 401 ist ferner ein Befestigen 402 jeweils einer Schalldämpfungsschicht 50 und/oder jeweils einer Abdichtungsschicht 60 an der ersten und zumindest einer zweiten Heizmatte 4.1, 4.2 vorgesehen. Das Befestigen 402 erfolgt dabei durch Aufkleben der Schalldämpfungsschicht 50 auf eine erste Seite der jeweiligen Heizmatte 4.1, 4.2 und durch Aufkleben der Abdichtungsschicht 60 auf eine gegenüberliegende Seite der jeweiligen Heizmatte 4.1, 4.2. Dadurch können die erste und/oder die zweite Heizmatte 4.1, 4.2 bereits vor einem Verlegen 403, 404 vollständig vorbereitet sein, so dass zumindest eine strukturelle Modifikation nicht mehr notwendig ist oder nur noch eingeschränkt notwendig ist. Ferner umfasst das Montageverfahren 400 ein Verlegen 403 der ersten Heizmatte 4.1 auf einem Bauelement 102 des Raumes 101. Das Bauelement 102 kann vorzugsweise ein Rohboden des Gebäudes 100 sein. Dabei kann die erste Heizmatte 4.1 in zugeschnittener Form an der Raumgeometrie 101.1 platziert werden, so dass eine möglichst große Fläche des Raumes 101 zum Detektieren des Ereignisses 3 bzw. zum Heizen des Raumes 101 abgedeckt werden kann. Nach dem Verlegen 403 der ersten Heizmatte 4.1 erfolgt ein Verlegen 404 zumindest der zweiten Heizmatte 4.2 neben der ersten Heizmatte 4.1 auf dem Bauelement 102 des Gebäudes 100. Ferner ist ein Herstellen 404.1 einer elektrischen Verbindung 40.1 der ersten Heizmatte 4.1 mit der zweiten Heizmatte 4.2 vorgesehen, so dass die Funktion des elektrischen Heizmittels 20 und/oder des Erfassungsmittels 30 der zweiten Heizmatte 4.2 an die erste Heizmatte 4.1 gekoppelt ist. Darüber hinaus ist ein Verkleben 405 der ersten Heizmatte 4.1 mit der zweiten Heizmatte 4.2 vorgesehen, wobei die erste und zweite Heizmatte 4.1, 4.2 in einem Randbereich 12 der Heizmatten 4.1, 4.2 befestigt wird. Insbesondere können die erste und zweite Heizmatte 4.1, 4.2 beim Verlegen 403, 404 überlappend angeordnet werden, so dass das Verkleben 405 flächig erfolgen kann. Dadurch kann zusätzlich zur elektrischen Verbindung 40.1 eine mechanische Verbindung der ersten und zweiten Heizmatte 4.1, 4.2 gewährleistet werden. Vorzugsweise kann die elektrische Verbindung 40.1 eine reversible und/oder formschlüssige Verbindung sein, so dass eine mechanische Festigkeit der Flächenheizung 1.1 bzw. der Flächensensorik 1.2 verbessert ist. Vorzugsweise können zur Ausgestaltung der Flächenheizung 1.1 weitere Heizmatten 4.3 an die erste und/oder zweite Heizmatte 4.1, 4.2 gekoppelt werden. Ferner umfasst das Montageverfahren 401 ein Anschließen 406 der ersten Heizmatte 4.1 an eine Energiequelle 2. Das Anschließen 406 der ersten Heizmatte 4.1 an die Energiequelle 2 kann vorzugsweise dadurch durchgeführt werden, dass die erste Heizmatte 4.1 an eine Steuereinheit 22 angeschlossen wird, durch welche mittelbar die erste Heizmatte 4.1 mit der Energiequelle 2, welche beispielsweise ein Stromnetz sein kann, verbunden wird. Somit kann die Energiezufuhr gleichzeitig durch die Steuereinheit 22 reguliert, insbesondere geregelt werden. Die Steuereinheit 22 kann dabei in einer Unterputzdose des Raumes 101 und/oder des Gebäudes 100 angeordnet sein. Anschließend erfolgt ein Aufbringen 407 eines Funktionsbelages 103 auch für die erste und die zweite Heizmatte 4.1, 4.2. Insbesondere handelt es sich bei dem Funktionsbelag 103 um einen Estrich. Dadurch wird der Fußboden des Raumes 101 begradigt und Unebenheiten, welche zum Beispiel durch das Verlegen der Flächenheizung 1.1 entstehen können, werden ausgeglichen. Darüber hinaus wird die Flächenheizung 1.1 durch den Funktionsbelag 103 zumindest teilweise geschützt. Anschließend erfolgt ein Aufbringen 408 eines Sichtbelages 104, so dass der Fußboden des Raumes 101 beispielsweise mit einem Teppich, einem Parkett oder dgl. ausgestattet werden kann. Das Anschließen 406 der ersten Heizmatte 4.1 an die Energiequelle 2 kann beispielsweise vor oder nach dem Aufbringen 408 des Sichtbelages 104 erfolgen. Ferner kann vorzugsweise nach dem Aufbringen 408 des Sichtbelages 104 ein Kalibrieren 409 des Erfassungsmittels 30 erfolgen, wobei Ist-Sensordaten 409.1 ermittelt werden und mit Referenz-Sensordaten 409.2 verglichen werden oder als Referenz-Sensordaten 409.2 gespeichert werden. Die Referenz-Sensordaten 409.2 können dabei beispielsweise einen Ist-Zustand abbilden, welcher ohne Anwesenheit einer Person im Raum 101 vorliegen kann, so dass die Anwesenheit einer Person im Raum 101 eine Abweichung der Messdaten des Erfassungsmittels 30 bewirkt und eine Detektion erfolgen kann. Vorzugsweise ebenfalls nach dem Aufbringen 408 des Sichtbelages 104 ist ferner ein Kalibrieren 410 des elektrischen Heizmittels 20 der ersten Heizmatte 4.1 vorgesehen, wobei eine Ist-Temperatur 410.1 ermittelt und mit einer vorgegebenen Soll-Temperatur 410.2 verglichen wird. Die vorgegebene Soll-Temperatur 410.2 kann beispielsweise eine gemessene Raumtemperatur sein, so dass ein Offset der Ist-Temperatur 410.1 zur Raumtemperatur ermittelt werden kann und damit das elektrische Heizmittel 20 auf die Gegebenheiten des Raumes 101 und insbesondere des Funktions- und/oder des Sichtbelages 103, 104 des Fußbodens angepasst werden kann. Somit können durch ein erfindungsgemäßes Montageverfahren 400 in einfacher Art und Weise eine Flächenheizung 1.1 und insbesondere eine Flächensensorik 1.2 geschaffen werden, wobei beispielsweise die Heizmatten 4.1, 4.2 bei einer Anlieferung zum Gebäude 100 vorgefertigt sein können und damit in einfacher Art und Weise verlegt werden können.

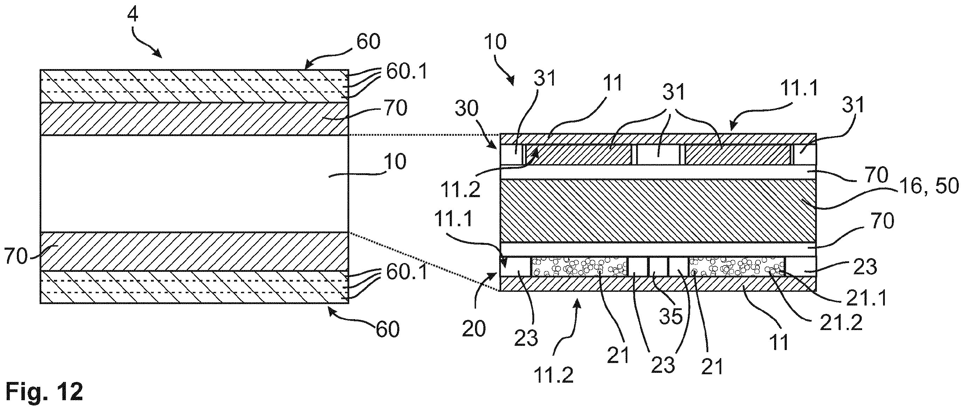

Figur 12 zeigt einen schematischen Aufbau einer erfindungsgemäßen Heizmatte 4 mit einer Detailansicht einer Basiseinheit 10 der Heizmatte 4. Die Basiseinheit 10 bildet dabei insbesondere einen Kern der Heizmatte 4 mit einer quadratischen Grundfläche. Die Basiseinheit 10 umfasst ein erstes und ein zweites Trägerelement 11, welche jeweils eine flächige Erstreckung mit einer ersten und einer zweiten Grundseite 11.1, 11.2 aufweisen. Vorzugsweise ist an der Basiseinheit 10 zumindest eine Abdichtungsschicht 60 angeordnet, insbesondere durch eine Klebeschicht 70 befestigt. Dabei kann die Abdichtungsschicht 60 mit der Klebeschicht 70 am ersten und/oder zweiten Trägerelement 11 angeordnet sein. Zusätzlich oder alternativ kann eine Schalldämpfungsschicht 50, wie im ersten Ausführungsbeispiel dargestellt, an der Basiseinheit 10 angeordnet sein. Damit sind das erste und zweite Trägerelement 11 zum Verlegen der Heizmatte 4, beispielsweise als Teil eines Begrenzungselementes 110 des Raumes 101, insbesondere eines Fußbodens, eines Gebäudes 100 geeignet. Dabei wird insbesondere auf die Darstellung in Figur 9 Bezug genommen. Die erste Grundseite 11.1 des ersten Trägerelementes 11 bildet vorzugsweise eine Oberseite des ersten Trägerelementes 11, wenn die Heizmatte 4 im Gebäude 100 als Fußbodenheizung verbaut wird. In diesem Fall bildet entsprechend die zweite Grundseite 11.2 des ersten Trägerelementes 11 die Unterseite des ersten Trägerelementes 11 und/oder der Basiseinheit 10. Auf der ersten Grundseite 11.1 des ersten Trägerelementes 11 ist ein elektrisches Heizmittel 20 zur Abgabe von Wärme vorgesehen. Die erste Grundseite 11.1 des zweiten Trägerelementes 11 bildet vorzugsweise eine Oberseite des zweiten Trägerelementes 11 und/oder der Basiseinheit 10, wenn die Heizmatte 4 im Gebäude 100 als Fußbodenheizung verbaut wird. In diesem Fall bildet entsprechend vorzugsweise die zweite Grundseite 11.2 die Unterseite des zweiten Trägerelementes 11. Damit sind die erste Grundseite 11.1 des ersten Trägerelementes 11 und die zweite Grundseite 11.2 des zweiten Trägerelementes 11 einander zugewandt. Auf der zweiten Grundseite 11.2 des zweiten Trägerelementes 11 ist ein Erfassungsmittel 30 zur Detektion eines Ereignisses 3 vorgesehen. Das Heizmittel 20 und das Erfassungsmittel 30 sind somit zwischen dem ersten und zweiten Trägerelement 11 angeordnet und damit zumindest teilweise geschützt. Zwischen dem ersten und zweiten Trägerelement 11 ist ferner ein Zwischenelement 16 angeordnet, das vorzugsweise als Schalldämpfungsschicht 50 ausgebildet ist. Damit ist durch das Zwischenelement 16 ein räumlicher Abstand und/oder eine elektrische Isolation zwischen dem ersten und zweiten Trägerelement 11 gewährleistet. Gleichzeitig kann ein Trittschall durch das Zwischenelement 16 reduziert sein.

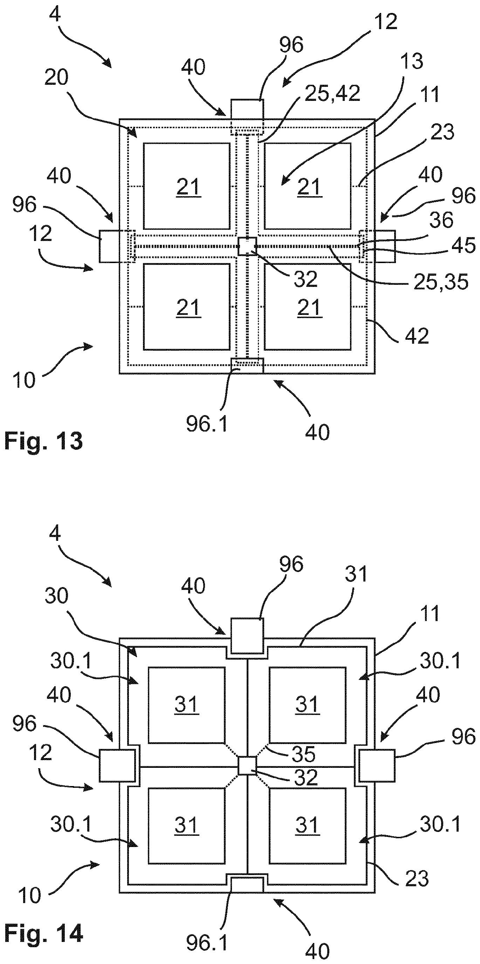

Figur 13 zeigt eine Draufsicht auf das erste Trägerelement 11 der Basiseinheit 10 mit dem elektrischen Heizmittel 20. Das elektrische Heizmittel 20 weist zumindest ein Widerstandselement 21 auf, welches sich auf der ersten Grundseite 11.1 des ersten Trägerelementes 11 erstreckt und vorzugsweise flächig, insbesondere plattenartig, ausgestaltet ist. Ferner weist das elektrische Heizmittel 20 zumindest zwei Leiterbahnen 42 auf, durch welche das Widerstandselement 21 mit einem elektrischen Anschluss 40 der Heizmatte 4 verbunden ist. Die Leiterbahnen 42 und/oder das Widerstandselement 21 können auf das erste Trägerelement 11 aufgedruckt sein. Vorzugsweise sind dabei zunächst die Leiterbahnen 42 direkt auf das erste Trägerelement 11 und das Widerstandselement 21 zumindest bereichsweise auf mit den Leiterbahnen 42 verbundene Heizleitelemente 23 und/oder zumindest bereichsweise auf das erste Trägerelement 11 aufgedruckt. Insbesondere sind die Leiterbahnen 42, die Heizleitelemente 23 und das Widerstandselement 21 stoffschlüssig mit dem ersten Trägerelement 11 und/oder untereinander verbunden. Um den elektrischen Widerstand der Heizleitelemente 23 und der Leiterbahnen 42 gering zu halten, weisen die Heizleitelemente 23 und die Leiterbahnen 42 insbesondere ein Edelmetall, vorzugsweise Silber, auf. Das Widerstandselement 21 ist dazu ausgebildet, Wärme abzugeben, wenn es bestromt wird. Die abgegebene Wärme resultiert dabei insbesondere aus dem Widerstand des Widerstandselementes 21. Insbesondere weist das Widerstandselement 21 dazu eine Karbonpaste auf, welche Kohlenstoff 21.1 und/oder einen Füllstoff 21.2 aufweist. Zur elektrischen Isolation des Heizmittels 20 kann ferner, wie im ersten Ausführungsbeispiel, eine erste Schutzschicht 14.1 vorgesehen sein, welche das elektrische Heizmittel 20 zumindest bereichsweise überdeckt. Insbesondere weist das Heizmittel 20 mehrere Widerstandselemente 21 in einem regelmäßigen Muster auf. Eine der Leiterbahnen 42 ist als kreuzartig umlaufender Anschlussabschnitt 25 ausgebildet. Dadurch können elektrische Anschlüsse 40, die in einem Randbereich 12 der Basiseinheit 10 angeordnet sind auch dann noch zur Energieversorgung eines der Widerstandselemente 21 eingesetzt werden, wenn die Heizmatte 4 zur Anpassung an eine Geometrie des Raumes 101 zugeschnitten wird. Eine der Leiterbahnen 42 weist ferner einen in einem Randbereich 12 der Basiseinheit 10 umlaufend verlaufenden Abschnitt auf, durch welchen die Zuschneidbarkeit der Heizmatte 4 verbessert ist.

Das Erfassungsmittel 30 kann vorzugsweise zur kapazitiven Detektion des Ereignisses 3 ausgebildet sein. Die Basiseinheit 10 umfasst dabei zumindest eine Datenleitung 35, welche insbesondere direkt auf das erste und/oder zweite Trägerelement 11 aufgebracht ist. Gemäß Figur 13 umfasst die Datenleitung 35 dabei Anschlussabschnitte 25, die sich kreuzartig von einer mittig an der Basiseinheit 10 angeordneten dezentralen Auswerteeinheit 32 zu den elektrischen Anschlüssen 40 erstrecken. Die Datenleitung 35 kann dabei zur Stromversorgung und/oder Datenkommunikation des Erfassungsmittels 30 dienen. Dazu kann die Datenleitung 35 vorzugsweise mehrere, insbesondere parallel verlaufende, Datenleiter umfassen, durch welche z.B. ein Daten-BUS bereitstellbar sein kann. Figur 14 zeigt eine Draufsicht auf das zweite Trägerelement 11 der Basiseinheit 10 mit dem Erfassungsmittel 30. Ferner umfasst das Erfassungsmittel 30 zwei Elektroden 31, durch welche gemeinsam ein elektrisches Feld generierbar ist. Eine der Elektroden 31 ist als Schirmelektrode zur Begrenzung des elektrischen Feldes und im Randbereich 12 der Basiseinheit 10 umlaufend ausgebildet. Zur elektrischen Isolation des Erfassungsmittels 30 gegenüber der Umwelt kann ferner eine zweite Schutzschicht 14.2, wie im Ausführungsbeispiel gemäß Figur 1 dargestellt, vorgesehen sein, wobei die zweite Schutzschicht 14.2 vorzugsweise zumindest bereichsweise das Erfassungsmittel 30 überdeckt. Insbesondere ist das Erfassungsmittel 30 mittelbar oder unmittelbar auf die zweite Grundseite 11.2 des zweiten Trägerelementes 11 aufgebracht. Ferner können die Elektroden 31 und/oder die Datenleitung 35 durch ein Druckverfahren stoffschlüssig mit dem zweiten Trägerelement 11 verbunden sein. Das Erfassungsmittel 30 weist für die Detektion des Ereignisses 3 vier Sensorelemente 30.1 auf, welche jeweils durch eine Elektrode 31 und die umlaufende Elektrode 31 in Form der Schirmelektrode gebildet sind. Dadurch sind insbesondere vier Erfassungsbereiche 34 zur Detektion des Ereignisses 3 geschaffen.

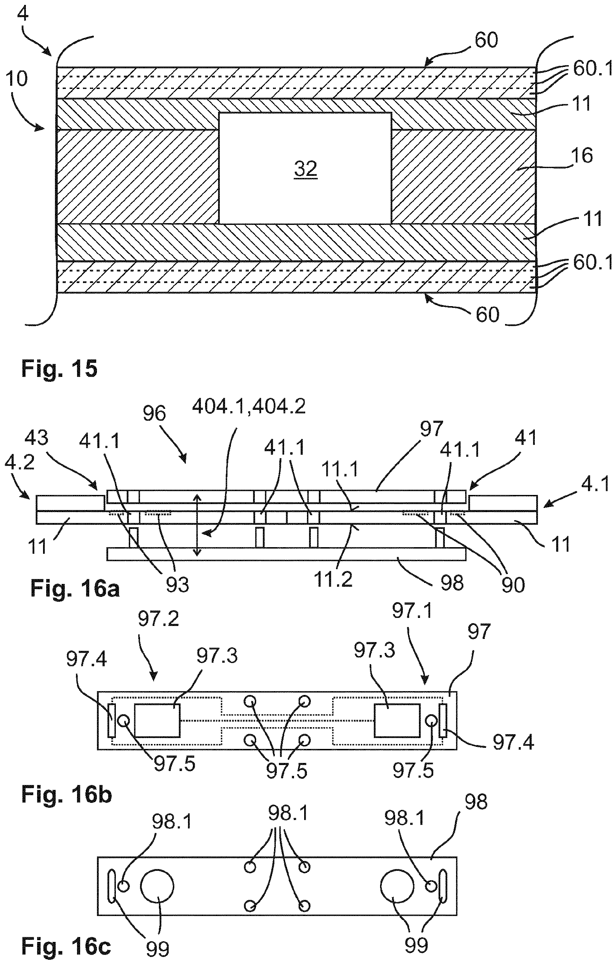

Die dezentrale Auswerteeinheit 32 ist mit jedem der Sensorelemente 30.1 der Heizmatte 4 verbunden. Die dezentrale Auswerteeinheit 32 ist durch die mittige Anordnung ferner in der Nähe der jeweiligen Sensorelemente 30.1 angeordnet, so dass eine Verbindungsstrecke zwischen den Sensorelementen 30.1 und der jeweiligen Auswerteeinheit 32 gering gehalten werden kann. Insbesondere ist die dezentrale Auswerteeinheit 32 dazu ausgebildet, analoge Messsignale der Sensorelemente 30.1 in digitale Signale umzuwandeln. Weiterhin kann eine Vorauswertung der Messsignale durch die dezentrale Auswerteeinheit 32 durchgeführt werden. Figur 15 zeigt ferner die Anordnung der dezentralen Auswerteeinheit 32 in der Basiseinheit 10 in geschnittener Ansicht. Die dezentrale Auswerteinheit 32 erstreckt sich zumindest teilweise in eine Aufnahmeöffnung des Zwischenelementes 16. Dadurch ist durch die dezentrale Auswerteinheit 32 auch eine elektrische Verbindung zwischen Komponenten des ersten und zweiten Trägerelementes 11 ermöglicht. Insbesondere können dadurch die Anschlussabschnitte 25 der Datenleitung 35 über die dezentrale Auswerteinheit 32 mit dem Erfassungsmittel 30 verbunden sein. Die elektrischen Anschlüsse 40 weisen, wie in Figur 16a dargestellt, jeweils eine Verbindungsschnittstelle 41 zum Verbinden des elektrischen Heizmittels 20 und des Erfassungsmittels 30 mit einer Verbindungseinheit 96 auf. Nicht benötigte elektrische Anschlüsse 40 können vorzugsweise durch ein Blindstück 96.1 verschließbar sein. Insbesondere können die elektrischen Anschlüsse 40 gemäß dem elektrischen Anschluss 40 der ersten und/oder zweiten Heizmatte 4.1, 4.2 nach Figur 16a ausgestaltet sein.

Gemäß der Figur 16a ist ein Herstellen 404.1 einer elektrischen Verbindung einer ersten Heizmatte 4.1 mit einer zweiten Heizmatte 4.2 gezeigt. Durch eine Verbindungseinheit 96 kann eine elektrische Verbindung einer Verbindungsschnittstelle 41 der ersten Heizmatte 4.1 mit einer Gegenverbindungsschnittstelle 43 der zweiten Heizmatte 4.2 gewährleistet werden, so dass über die elektrischen Anschlüsse 40 zumindest mittelbar ein Anschluss der ersten und zweiten Heizmatte 4.1, 4.2 an eine Energiequelle 2 und/oder eine Steuereinheit 22 möglich ist. Dazu kann ein Platzieren 404.2 der Verbindungseinheit 96 an der Verbindungsschnittstelle 41 der ersten Heizmatte 4.1 und an einer Gegenverbindungsschnittstelle 43 der zweiten Heizmatte 4.1 vorgesehen sein. Insbesondere können die Heizmatten 4.1, 4.2 zum Anschluss an die Energiequelle 2 und/oder die Steuereinheit 22 mit einer weiteren Heizmatten 4.3 und/oder ein Netzwerk aus weiteren Heizmatten 4.3 verbunden sein. Die Verbindungseinheit 96 weist ferner einen flächigen Verbindungskörper 97, wie in Figur 16b dargestellt, und einen flächigen Befestigungskörper 98, wie in Figur 16c dargestellt, auf. Beim Platzieren 404.2 der Verbindungseinheit 96 werden vorzugsweise die erste und zweite Heizmatte 4.1, 4.2 zumindest abschnittsweise zwischen dem Verbindungskörper 97 der Verbindungseinheit 96 und dem flächigen Befestigungskörper 98 der Verbindungseinheit 96 angeordnet, so dass die erste und zweite Heizmatte 4.1, 4.2 zwischen dem Verbindungskörper 97 und dem Befestigungskörper 98, vorzugsweise durch eine Magnetkraft zwischen dem Befestigungskörper 98 und dem Verbindungskörper 97, eingeklemmt werden. Für die elektrische Verbindung der Verbindungsschnittstelle 41 und der Gegenverbindungsschnittstelle 43 kann der Verbindungskörper 97 in einer Ausnehmung 46 einer Basiseinheiten 10 der ersten und zweiten Heizmatte 4.1, 4.2 angeordnet werden. Dabei weist der Verbindungskörper 97 einen ersten und einen zweiten Kontaktabschnitt 97.1, 97.2 auf, die miteinander elektrisch verbunden sind. Um eine separate Kontaktierung eines Erfassungsmittels 30 und eines Heizmittels 20 der ersten und zweiten Heizmatte 4.1, 4.2 zu gewährleisten, weisen der erste und zweite Kontaktabschnitt 97.1, 97.2 jeweils zumindest ein erstes Kontaktelement 97.3 und ein zweites Kontaktelement 97.4 auf, wobei die ersten Kontaktelemente 97.3 und zweiten Kontaktelemente 97.4 jeweils separat miteinander verbunden sind. Die Verbindungsschnittstelle 41 weist ferner zwei Verbindungsmittel 90 in Form elektrischer Kontakte auf einer ersten Grundseite 11.1 eines ersten Trägerelementes 11 der ersten Heizmatte 4.1 auf. Die Gegenverbindungsschnittstelle 43 weist zwei analog ausgestaltete Gegenverbindungsmittel 93 in Form elektrischer Kontakte auf einer ersten Grundseite 11.1 eines ersten Trägerelementes 11 der zweiten Heizmatte 4.2 auf. Somit können durch die Verbindungseinheit 96 zwei gleichartige Schnittstellen 41, 43 in einfacher Art und Weise baustellengerecht verbunden werden. Um die Befestigung der Verbindungseinheit 96 zu vereinfachen ist ferner der Befestigungskörper 98 vorgesehen. Dieser kann auf einer dem Verbindungskörper 97 gegenüberliegenden Seite des ersten Trägerelementes 11 angeordnet werden. Ferner umfasst der Befestigungskörper 98 Magneten 99, die mit den Kontaktelementen 97.3 in Wirkverbindung bringbar sind. Insbesondere sind die Kontaktelemente 97.3 dazu magnetisierbar. Werden somit der Befestigungskörper 98 und der Verbindungskörper 97 derart angeordnet, dass das erste Trägerelement 11 zwischen dem Befestigungskörper 98 und dem Verbindungskörper 97 angeordnet ist, wird das erste Trägerelement 11 durch die Verbindungseinheit 96 eingeklemmt. Gleichzeitig bewirken die Magneten 99 eine Magnetkraft auf die Kontaktelemente 97.3, so dass die Kontaktelemente 97.3 gegen die Verbindungsmittel 90 bzw. die Gegenverbindungsmittel 93 gepresst werden. Dadurch ergibt sich zum einen eine kraftschlüssige Befestigung der Verbindungseinheit 96 an der ersten und zweiten Heizmatte 4.1, 4.2 und zum anderen eine zuverlässige Kontaktierung. Für eine formschlüssige Verbindung und eine korrekte Positionierung der Verbindungseinheit 96 weist der Befestigungskörper 98 ferner zumindest eine Positionierhilfe 98.1 in Form von Vorsprüngen, der Verbindungskörper 97 zumindest eine Gegenpositionierhilfe 97.5 und die Verbindungsschnittstelle 41 zumindest ein Ausrichtmittel 41.1 auf. Bei der Befestigung der Verbindungseinheit 96 an der Verbindungsschnittstelle wirkt die Positionierhilfe 98.1 mit der Gegenpositionierhilfe 97.5 und dem Ausrichtmittel 41.1, so dass eine formschlüssige Verbindung entsteht. Weiterhin wird durch die geschickte Anordnung und Ausgestaltung der Positionierhilfe 98.2, der Gegenpositionierhilfe 97.5 und des Ausrichtmittels 41.1 eine Fehlpositionierung der Verbindungseinheit 96 verhindert.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, im Rahmen des durch die Patentansprüche definierten Schutzumfangs frei miteinander kombiniert werden, ohne den Rahmen der vorliegenden Erfindung zu verlassen.

### Bezugszeichenliste

- 1.1: Flächenheizung
- 1.2: Flächensensorik
- 2: Energiequelle
- 3: Ereignis
- 4: Heizmatte
- 4.1: erstes Heizmatte
- 4.2: zweite Heizmatte
- 4.3: weitere Heizmatte

- 10: Basiseinheit
- 11: Trägerelement
- 11.1: erste Grundseite
- 11.2: zweite Grundseite
- 12: Randbereich
- 13: Mittenbereich
- 14.1: erste Schutzschicht
- 14.2: zweite Schutzschicht
- 14.3: weitere Schutzschicht
- 15: Soll-Schnittlinie
- 16: Zwischenelement

- 20: elektrisches Heizmittel
- 21: Widerstandselement
- 21.1: Kohlenstoff
- 21.2: Füllstoff
- 22: Steuereinheit
- 23: Heizleitelement
- 24: Temperatursensor
- 25: Anschlussabschnitt
- 30: Erfassungsmittel
- 30.1: Sensorelement
- 31: Elektrode
- 32: dezentrale Auswerteeinheit
- 33: zentrales Steuergerät
- 34: Erfassungsbereich
- 35: Datenleitung
- 35.1: Ringabschnitt
- 35.2: Versorgungsabschnitt
- 36: Datenanschluss
- 37: Durchgangselement

- 40: elektrischer Anschluss
- 40.1: elektrische Verbindung
- 41: Verbindungsschnittstelle
- 41.1: Ausrichtmittel
- 42: Leiterbahn
- 43: Gegenverbindungsschnittstelle
- 44: Befestigungsschnittstelle
- 45: Heizanschluss
- 46: Ausnehmung

- 50: Schalldämpfungsschicht

- 60: Abdichtungsschicht
- 60.1: Faserschicht

- 70: Klebeschicht
- 71: Klebeband
- 71.1: erster Klebebereich
- 71.2: zweiter Klebebereich

- 80: externe Recheneinheit
- 81: mobiles Endgerät

- 90: Verbindungsmittel
- 93: Gegenverbindungsmittel
- 96: Verbindungseinheit
- 97: Verbindungskörper
- 97.1: erster Kontaktabschnitt
- 97.2: zweiter Kontaktabschnitt
- 97.3: erstes Kontaktelement
- 97.4: zweites Kontaktelement
- 97.5: Gegenpositionierhilfe
- 98: Befestigungskörper
- 99: Magnet
- 100: Gebäude
- 101: Raum
- 102: Bauelement
- 103: Funktionsbelag
- 104: Sichtbelag
- 110: Begrenzungselement

- 400: Verfahren zum Bereitstellen einer elektrobasierten Funktion
- 409.1: Ist-Sensordaten
- 409.2: Soll-Sensordaten
- 410.1: Ist-Temperatur
- 410.2: Soll-Temperatur

- A: Biegewinkel
- R: Biegeradius
- T1-Tn: Zeitpunkte

## Patentansprüche

1. Montageverfahren (400) zur Montage einer Flächenheizung (1.1) in einem Raum (101) eines Gebäudes (100), aufweisend die folgenden Schritte:
- Verlegen (403) einer ersten Heizmatte (4.1) mit einem elektrischen Heizmittel (20) auf einem Bauelement (102) des Gebäudes (100),
- Verlegen (404) einer zweiten Heizmatte (4.2) mit einem weiteren elektrischen Heizmittel (20) neben der ersten Heizmatte (4.1) auf dem Bauelement (102) des Gebäudes (100) und Herstellen (404.1) einer elektrischen Verbindung (40.1) der ersten Heizmatte (4.1) mit der zweiten Heizmatte (4.2),
- Anschließen (406) zumindest der ersten Heizmatte (4.1) an eine Energiequelle (2),
**dadurch gekennzeichnet,**
**dass** das Herstellen (404.1) der elektrischen Verbindung (40.1) der ersten Heizmatte (4.1) mit der zweiten Heizmatte (4.2) ein Platzieren (404.2) einer Verbindungseinheit (96) an einer Verbindungsschnittstelle (41) der ersten Heizmatte (4.1) und an einer Gegenverbindungsschnittstelle (43) der zweiten Heizmatte (4.1) umfasst, wobei beim Platzieren (404.2) der Verbindungseinheit (96) die erste und zweite Heizmatte (4.1, 4.2) zumindest abschnittsweise zwischen einem flächigen Verbindungskörper (97) der Verbindungseinheit (96) und einem flächigen Befestigungskörper (98) der Verbindungseinheit (96) angeordnet werden.

2. Montageverfahren (400) nach Anspruch 1,
**dadurch gekennzeichnet,**
**dass** die elektrische Verbindung (40.1) eine kraftschlüssige, formschlüssige und/oder reversible Verbindung ist.

3. Montageverfahren (400) nach einem der Ansprüche 1 oder 2,
**dadurch gekennzeichnet,**
**dass** die erste Heizmatte (4.1), insbesondere beim Anschließen (406) an die Energiequelle (2), mit einer Steuereinheit (22) verbunden wird, durch welche zumindest eine Funktion der ersten und/oder der zweiten Heizmatte (4.1, 4.2) ansteuerbar ist.

4. Montageverfahren (400) nach einem der vorhergehenden Ansprüche,
**dadurch gekennzeichnet,**
**dass** das Montageverfahren (400) folgenden Schritt umfasst:
- Befestigen (402) einer Schalldämpfungsschicht (50) und/oder einer Abdichtungsschicht (60) an der ersten und/oder zweiten Heizmatte (4.1, 4.2).

5. Montageverfahren (400) nach einem der vorhergehenden Ansprüche,
**dadurch gekennzeichnet,**
**dass** die erste und zweite Heizmatte (4.1, 4.2) überlappend verlegt werden, insbesondere wobei folgender Schritt vorgesehen ist:
- Verkleben (405) der ersten und zweiten Heizmatte (4.1, 4.2) in jeweils zumindest einem Randbereich (12) der ersten und zweiten Heizmatte (4.1, 4.2).

6. Montageverfahren (400) nach einem der vorhergehenden Ansprüche,
**dadurch gekennzeichnet,**
**dass** das Montageverfahren (400) ferner folgenden Schritt umfasst:
- Kalibrieren (410) des elektrischen Heizmittels (20), insbesondere lediglich, der ersten Heizmatte (4.1), wobei eine Ist-Temperatur (410.1) ermittelt und mit einer vorgegebenen Soll-Temperatur (410.2) verglichen wird.

7. Montageverfahren (400) nach einem der vorhergehenden Ansprüche,
**dadurch gekennzeichnet,**
**dass** die erste und/oder zweite Heizmatte (4.1, 4.2) ein Erfassungsmittel (30) zur, insbesondere kapazitiven, Erfassung eines Ereignisses (3) aufweist.

8. Montageverfahren (400) nach Anspruch 7,
**dadurch gekennzeichnet,**
**dass** das Montageverfahren (400) ferner folgenden Schritt umfasst:
- Kalibrieren (409) des Erfassungsmittels (30), insbesondere lediglich, der ersten Heizmatte (4.1), wobei Ist-Sensordaten (409.1) ermittelt werden und mit Referenz-Sensordaten (409.2) verglichen werden oder als Referenz-Sensordaten (409.2) gespeichert werden.

9. Montageverfahren (400) nach einem der vorhergehenden Ansprüche,
**dadurch gekennzeichnet,**
**dass** das Montageverfahren (400) folgenden Schritt umfasst:
- Zuschneiden (401), insbesondere entlang zumindest einer Soll-Schnittlinie (15), der ersten und/oder der zweiten Heizmatte (4.1, 4.2), so dass die erste und/oder zweite Heizmatte (4.1, 4.2) an eine Raumgeometrie (101.1) angepasst wird und gleichzeitig eine Funktion des elektrischen Heizmittels (20) und/oder des Erfassungsmittels (30) der ersten und/oder zweiten Heizmatte (4.1, 4.2) zumindest teilweise erhalten bleibt.

10. Montageverfahren (400) nach einem der vorhergehenden Ansprüche,
**dadurch gekennzeichnet,**
**dass** das Montageverfahren (400), insbesondere vor dem Kalibrieren (409, 410) des elektrischen Heizmittels (20) und/oder des Erfassungsmittels (30), ferner zumindest einen der folgenden Schritte umfasst:
- Aufbringen (407) eines Funktionsbelages (103) auf die erste und zweite Heizmatte (4.1, 4.2), insbesondere wobei der Funktionsbelag (103) ein Estrich ist,
- Aufbringen (408) eines Sichtbelages (104).

11. Montageverfahren (400) nach einem der vorhergehenden Ansprüche,
**dadurch gekennzeichnet,**
**dass** beim Platzieren (404.2) der Verbindungseinheit (96) die erste und zweite Heizmatte (4.1, 4.2) zwischen dem Verbindungskörper (97) und dem Befestigungskörper (98), vorzugsweise durch eine Magnetkraft zwischen dem Befestigungskörper (98) und dem Verbindungskörper (97), eingeklemmt werden.

12. Flächenheizung (1.1), insbesondere Fußbodenheizung (1.1),
**dadurch gekennzeichnet,**
**dass** die Flächenheizung (1.1) durch ein Montageverfahren (400) gemäß einem der vorhergehenden Ansprüche in einem Raum (101) eines Gebäudes (100) montierbar ist.

13. Anordnung aus einer Flächenheizung (1.1), insbesondere Fußbodenheizung (1.1), und einem Raum (101) eines Gebäudes (100),
**dadurch gekennzeichnet,**
**dass** die Flächenheizung (1.1) durch ein Montageverfahren (400) gemäß einem der Ansprüche 1 bis 11 in dem Raum (101) des Gebäudes (100) montiert ist.

## Claims

1. Assembly method (400) for mounting a panel heater (1.1) in a room (101) of a building (100), comprising the following steps:
- laying (403) a first heating mat (4.1) with an electric heating means (20) on a structural element (102) of the building (100),
- laying (404) a second heating mat (4.2) with a further electrical heating means (20) next to the first heating mat (4.1) on the building element (102) of the building (100) and making (404.1) an electrical connection (40.1) of the first heating mat (4.1) to the second heating mat (4.2),
- connecting (406) at least the first heating mat (4.1) to a power source (2),
**characterized in that**
the production (404.1) of the electrical connection (40.1) of the first heating mat (4.1) to the second heating mat (4.2) comprises a placement (404.2) of a connection unit (96) at a connection interface (41) of the first heating mat (4.1) and at a mating connection interface (43) of the second heating mat (4.1, 4.2), wherein, during placement (404.2) of the connecting unit (96), the first and second heating mats (4.1, 4.2) are arranged at least in sections between a planar connecting body (97) of the connecting unit (96) and a planar fastening body (98) of the connecting unit (96).

2. Assembly method (400) according to claim 1,
**characterized in that**
the electrical connection (40.1) is a non-positive, positive and/or reversible connection.

3. Assembly method (400) according to any one of claims 1 or 2,
**characterized in that**
the first heating mat (4.1), in particular when it is connected (406) to the energy source (2), is connected to a control unit (22) by means of which at least one function of the first and/or of the second heating mat (4.1, 4.2) can be controlled.

4. Assembly method (400) according to any one of the preceding claims,
**characterized in that**
the assembly method (400) comprises the following step:
- attaching (402) a sound dampening layer (50) and/or a sealing layer (60) to the first and/or second heating mat (4.1, 4.2).

5. Assembly method (400) according to any one of the preceding claims,
**characterized in that**
the first and second heating mats (4.1, 4.2) are laid in an overlapping manner, in particular the following step being provided:
- bonding (405) the first and second heating mats (4.1, 4.2) in at least one edge region (12) of each of the first and second heating mats (4.1, 4.2).

6. Assembly method (400) according to any one of the preceding claims,
**characterized in that**
the assembly method (400) further comprises the step of:
- calibrating (410) the electrical heating means (20), in particular only, of the first heating mat (4.1), wherein an actual temperature (410.1) is determined and compared with a predetermined set temperature (410.2).

7. Assembly method (400) according to any one of the preceding claims,
**characterized in that**
the first and/or second heating mat (4.1, 4.2) has a detection means (30) for, in particular capacitive, detection of an event (3).

8. Assembly method (400) according to claim 7,
**characterized in that**
the assembly method (400) further comprises the step of:
- calibration (409) of the detection means (30), in particular only of the first heating mat (4.1), wherein actual sensor data (409.1) are determined and compared with reference sensor data (409.2) or stored as reference sensor data (409.2).

9. Assembly method (400) according to any one of the preceding claims,
**characterized in that**
the assembly method (400) comprises the following step:
- cutting (401), in particular along at least one desired cutting line (15), of the first and/or the second heating mat (4.1, 4.2), so that the first and/or second heating mat (4.1, 4.2) is adapted to a room geometry (101.1) and, at the same time, a function of the electrical heating means (20) and/or of the detection means (30) of the first and/or second heating mat (4.1, 4.2) is at least partially maintained.

10. Assembly method (400) according to any one of the preceding claims,
**characterized in that**
the assembly method (400), in particular before calibrating (409, 410) the electric heating means (20) and/or the detection means (30), further comprises at least one of the following steps:
- applying (407) a functional covering (103) to the first and second heating mats (4.1, 4.2), in particular wherein the functional covering (103) is a screed,
- application (408) of an exposed coating (104).

11. Assembly method (400) according to any one of the preceding claims,
**characterized in that**
when the connecting unit (96) is placed (404.2), the first and second heating mats (4.1, 4.2) are clamped between the connecting body (97) and the fastening body (98), preferably by a magnetic force between the fastening body (98) and the connecting body (97).

12. Panel heater (1.1), especially floor heating (1.1),
**characterized in that**
the panel heater (1.1) is mountable in a room (101) of a building (100) by a mounting method (400) according to one of the preceding claims.

13. Arrangement consisting of a panel heater (1.1), in particular floor heating (1.1), and a room (101) of a building (100),
**characterized in that**
the panel heater (1.1) is mounted in the room (101) of the building (100) by a mounting method (400) according to any one of claims 1 to 11.

## Revendications

1. Procédé de montage (400) pour le montage d'un chauffage de surface (1.1) dans une pièce (101) d'un bâtiment (100), présentant les étapes suivantes :
- la pose (403) d'un premier natte chauffant (4.1) avec un moyen de chauffage électrique (20) sur un élément de construction (102) du bâtiment (100),
- la pose (404) d'une deuxième natte chauffante (4.2) avec un autre moyen de chauffage électrique (20) à côté de la première natte chauffante (4.1) sur l'élément de construction (102) du bâtiment (100) et la réalisation (404.1) d'une connexion électrique (40.1) de la première natte chauffante (4.1) avec la deuxième natte chauffante (4.2),
- le raccordement (406) d'au moins la première natte chauffante (4.1) à une source d'énergie (2),
**caractérisé en ce que**
la réalisation (404.1) de la connexion électrique (40.1) de la première natte chauffante (4.1) avec la deuxième natte chauffante (4.2) comprend un placement (404.2) d'une unité de connexion (96) sur une interface de connexion (41) de la première natte chauffante (4.1) et sur une interface de connexion opposée (43) de la deuxième natte chauffante (4.2).1), dans lequel, lors du placement (404.2) de l'unité de liaison (96), la première et la deuxième nattes chauffantes (4.1, 4.2) sont disposées au moins par sections entre un corps de liaison plat (97) de l'unité de liaison (96) et un corps de fixation plat (98) de l'unité de liaison (96).

2. Procédé de montage (400) selon la revendication 1,
**caractérisé en ce que**
la liaison électrique (40.1) est une liaison par adhérence, par complémentarité de forme et/ou réversible.

3. Procédé de montage (400) selon l'une des revendications 1 ou 2,
**caractérisé en ce que**
la première natte chauffante (4.1) est reliée, en particulier lors du raccordement (406) à la source d'énergie (2), à une unité de commande (22) par laquelle au moins une fonction de la première et/ou de la deuxième natte chauffante (4.1, 4.2) peut être commandée.

4. Procédé de montage (400) selon l'une quelconque des revendications précédentes,
**caractérisé en ce que**
le procédé de montage (400) comprend l'étape suivante :
- fixer (402) une couche d'insonorisation (50) et/ou une couche d'étanchéité (60) sur la première et/ou la deuxième natte chauffante (4.1, 4.2).

5. Procédé de montage (400) selon l'une quelconque des revendications précédentes,
**caractérisé en ce que**
la première et la deuxième nattes chauffantes (4.1, 4.2) sont posées en se chevauchant, en particulier l'étape suivante étant prévue :
- le collage (405) de la première et de la deuxième nattes chauffantes (4.1, 4.2) dans respectivement au moins une zone de bord (12) de la première et de la deuxième nattes chauffantes (4.1, 4.2).

6. Procédé de montage (400) selon l'une quelconque des revendications précédentes,
**caractérisé en ce que**
le procédé d'assemblage (400) comprend en outre l'étape suivante :
- l'étalonnage (410) du moyen de chauffage électrique (20), en particulier uniquement, de la première nappe chauffante (4.1), une température réelle (410.1) étant déterminée et comparée à une température de consigne (410.2) prédéfinie.

7. Procédé de montage (400) selon l'une quelconque des revendications précédentes,
**caractérisé en ce que**
la première et/ou la deuxième natte chauffante (4.1, 4.2) présente un moyen de détection (30) pour la détection, en particulier capacitive, d'un événement (3).

8. Procédé de montage (400) selon la revendication 7,
**caractérisé en ce que**
le procédé de montage (400) comprend en outre l'étape suivante :
- l'étalonnage (409) du moyen de détection (30), en particulier uniquement, de la premier natte chauffant (4.1), des données de capteur réelles (409.1) étant déterminées et comparées à des données de capteur de référence (409.2) ou mémorisées en tant que données de capteur de référence (409.2).

9. Procédé de montage (400) selon l'une quelconque des revendications précédentes,
**caractérisé en ce que**
le procédé de montage (400) comprend l'étape suivante :
- découpe (401), en particulier le long d'au moins une ligne de coupe théorique (15), de la première et/ou de la deuxième natte chauffante (4.1, 4.2), de sorte que la première et/ou la deuxième natte chauffante (4.1, 4.2) soit adaptée à une géométrie de pièce (101.1) et qu'en même temps, une fonction du moyen de chauffage électrique (20) et/ou du moyen de détection (30) de la première et/ou de la deuxième natte chauffante (4.1, 4.2) soit au moins partiellement conservée.

10. Procédé de montage (400) selon l'une quelconque des revendications précédentes,
**caractérisé en ce que**
le procédé de montage (400), en particulier avant le calibrage (409, 410) du moyen de chauffage électrique (20) et/ou du moyen de détection (30), comprend en outre au moins l'une des étapes suivantes :
- l'application (407) d'un revêtement fonctionnel (103) sur la première et la deuxième natte chauffante (4.1, 4.2), en particulier dans lequel le revêtement fonctionnel (103) est une chape,
- l'application (408) d'un revêtement visible (104).

11. Procédé de montage (400) selon l'une quelconque des revendications précédentes,
**caractérisé en ce que**
lors du placement (404.2) de l'unité de liaison (96), la première et la deuxième nattes chauffantes (4.1, 4.2) sont coincées entre le corps de liaison (97) et le corps de fixation (98), de préférence par une force magnétique entre le corps de fixation (98) et le corps de liaison (97).

12. Chauffage de surface (1.1), en particulier chauffage par le sol (1.1),
**caractérisé en ce que**
le chauffage de surface (1.1) peut être monté dans une pièce (101) d'un bâtiment (100) par un procédé de montage (400) selon l'une des revendications précédentes.

13. Agencement constitué d'un chauffage de surface (1.1), en particulier d'un chauffage par le sol (1.1), et d'une pièce (101) d'un bâtiment (100),
**caractérisé en ce que**
le chauffage de surface (1.1) est monté dans la pièce (101) du bâtiment (100) par un procédé de montage (400) selon l'une des revendications 1 à 11.
